(19) Europäisches Patentamt
European Patent Office
Office européen des brevets

(11) EP 1 584 663 A1

(12) EUROPEAN PATENT APPLICATION
published in accordance with Art. 158(3) EPC

(43) Date of publication:
**12.10.2005 Bulletin 2005/41**

(21) Application number: **03768330.7**

(22) Date of filing: **26.12.2003**

(51) Int Cl.[7]: **C09D 4/02**, C09D 133/26, C09D 5/16, C08F 220/58, C08F 220/28, B32B 27/30, C09K 3/00

(86) International application number:
**PCT/JP2003/016971**

(87) International publication number:
**WO 2004/058900 (15.07.2004 Gazette 2004/29)**

(84) Designated Contracting States:
**AT BE BG CH CY CZ DE DK EE ES FI FR GB GR HU IE IT LI LU MC NL PT RO SE SI SK TR**

(30) Priority:
**26.12.2002 JP 2002376813**
**02.07.2003 JP 2003190147**
**02.07.2003 JP 2003190148**
**21.10.2003 JP 2003360906**

(71) Applicants:
- **Mitsui Chemicals, Inc.**
  **Tokyo 105-7117 (JP)**
- **Tohcello Co., Ltd.**
  **Tokyo 104-0031 (JP)**

(72) Inventors:
- **OKAZAKI, Kouju, MITSUI CHEMICALS, INC.**
  **Sodegaura-shi, Chiba 299-0265 (JP)**
- **SEKI, Ryouiti, MITSUI CHEMICALS, INC.**
  **Sodegaura-shi, Chiba 299-0265 (JP)**
- **NAKATSUKA, Shiro, MITSUI CHEMICALS, INC.**
  **Sodegaura-shi, Chiba 299-0265 (JP)**
- **NAKAMURA, Osamu, TOHCELLO CO., LTD.**
  **Sashima-gun, Ibaraki 306-0213 (JP)**

(74) Representative: **HOFFMANN EITLE**
**Patent- und Rechtsanwälte**
**Arabellastrasse 4**
**81925 München (DE)**

# (54) ANTIFOULING MATERIAL USING HYDROXYL GROUP-CONTAINING ACRYLAMIDE DERIVATIVE AND USE THEREOF

(57) An antifouling material and an antifouling film, which are excellent in hydrophilicity and have such a characteristic that the surface is self-cleaned with rain water or the like, or can be easily cleaned up even when a contaminant adheres to the surface thereof, can be obtained by copolymerizing a composition containing an acrylamide derivative having at least one hydroxyl group in the molecule and a compound having at least two (meth)acryloyloxy groups in the molecule.

EP 1 584 663 A1

## Description

Technical Field

The present invention relates to an antifouling material. More particularly, it relates to an antifouling material comprising a copolymer obtained by copolymerizing a composition containing an acrylamide derivative having at least one hydroxyl group in the molecule and a compound having at least two (meth)acryloyl groups in the molecule.

Background Art

A hydrophilizing agent (Polymer, 44 (5), pp. 307; Expected Materials for the Future, 2 (1), pp. 36-41) having a self-cleaning property (antifouling property) of effectively eliminating dirt (an airborne hydrophobic substance, etc.) adhering to an exterior wall or the like by detaching it with rainfall, water sprinkling or the like and a hydrophilizing agent having an anti-fogging property have attracted the attention (Toa Gosei Kenkyu Nenpo, TREND, February issue, pp. 39-44).

As a resin with a hydrophilicity useful as a hydrophilizing agent, a number of resins in which lots of hydroxyl groups are bound in the molecule such as polyvinyl alcohol are known. These resins with a hydrophilicity exhibit different properties depending on the difference in their chemical structures. Therefore, the development of a product suitable for the properties of the respective resins has been carried out.

As for the resins with a hydrophilicity, for example, a report on a polymer obtained by using an acrylamide derivative having an hydroxyl group such as N,N-bis(hydroxyethyl)(meth)acrylamide described in JP-A-61-52 or 2, 3-dihydroxypropyl (meth) acrylamide described in JP-B-48-19295 has been also made.

In JP-A-61-52, it is described that a polymer or a copolymer obtained by polymerizing N,N-bis(hydroxyethyl)(meth)acrylamide alone or with another polymerizable monomer can be used as a discharged water-cleaning agent, a blood anticoagulant agent or a hydrophilizing agent for the surface of an apparatus for blood examination. In JP-A-2001-206912, it is reported that a cured polymer obtained by curing N,N-bis(hydroxyethyl)acrylamide with radiation such as an electron beam has a hydrophilicity, and when this cured polymer is used in ink-jet printing paper, the stickiness after printing is reduced. In JP-B-07-4522, it is reported that a transparent aqueous solution of a water dispersible polymer compound is obtained by polymerizing 2,3-dihydroxypropyl (meth)acrylamide and 2-phenoxyethyl acrylate.

Many of the conventional antifouling materials are the one in which a coating film showing a high water-shedding property and a hydrophobicity is formed on the surface. On the other hand, by hydrophilizing the surface of a coating film, a variety of new antifouling materials having a self-cleaning property (antifouling property) of effectively eliminating dirt (an airborne hydrophobic substance, etc.) adhering to an exterior wall or the like by detaching it with rainfall, water sprinkling or the like have been proposed.

As such an antifouling material, a plate-like member in which a composition comprising a photo-catalytic oxide such as titanium oxide and a silicone or a silica is laminated on the surface of a transparent base material (WO 96/29375 (abstract, claims 3 and 5)), an antifouling material using a photo-catalytic oxide such as titanium oxide, for example, an antifouling film in which, on one surface of a base material containing a weather resistance improver, a barrier layer for shielding a bleeding out of the weather resistance improver and an antifouling layer containing a metal oxide having a photocatalytic function are sequentially laminated (JP-A-2002-120318 (claim 1)) or the like, a sheet for rain protection in which a cured substance of a composition containing polyol or isocyanate curing agent and a silicon oxide-based hydrophilizing agent such as an organosilicate compound is laminated (JP-A-2002-46243 (claim 2)) and the like have been proposed.

However, the above-mentioned resins with a hydrophilicity having a linear structure containing a hydroxyl group or a crosslinked structure with a low crosslinking degree between molecules have a high solubility in water or, though it is not dissolved in water, it absorbs water and is likely to turn into gel. Therefore, they are hardly sufficient to be used as a material in which a self-cleaning property is required.

In addition, the above-mentioned antifouling material having an antifouling layer containing a metal oxide such as titanium oxide having a photocatalytic function or an antifouling material in which a hydrophilizing agent such as an organosilicate compound is laminated has not only a hydrophilicity but also a lipophilicity. Therefore, it cannot exert a sufficient antifouling performance against a contaminant, for example, a combustion product such as carbon black, an oil component contained in an exhaust gas, urban dust, or an inorganic substance such as a clay particle, and the contaminant adhering to the surface may not be easily removed with rain water or the like, that is, the self-cleaning effect is not sufficient in some cases.

Disclosure of the invention

An object of the present invention is to provide an antifouling material and an antifouling film, in which the

surface can be self-cleaned or can be easily cleaned up even when a contaminant, for example, a combustion product such as carbon black, an oil component contained in an exhaust gas or the like adheres thereto.

The present inventors have studied in order to solve the above-mentioned problems. As a result, they found that a copolymer obtained by copolymerizing a composition containing an acrylamide derivative having at least one hydroxyl group in the molecule and a compound having at least two (meth)acryloyl groups in the molecule is useful as an antifouling material, and thus completed the present invention.

That is, the present invention provide:

(1) an antifouling material comprising a copolymer obtained by copolymerizing a composition containing a compound represented by the general formula (1):

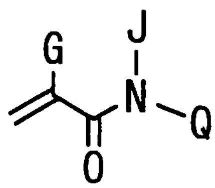

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$, with the proviso that the case where J and Q are simultaneously a combination of a hydrogen atom and a hydrogen atom, a combination of a hydrogen atom and a methyl group or a combination of a methyl group and a methyl group is excluded) and a compound having at least two (meth)acryloyl groups in the molecule;

(2) the antifouling material described in the above-mentioned (1), wherein the compound having at least two (meth) acryloyl groups in the molecule described in the above-mentioned (1) is any compound selected from compounds represented by the following general formula (2) to general formula (5):

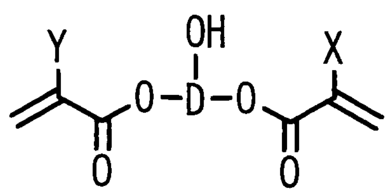

(2)

(wherein X and Y independently represent a hydrogen atom or a methyl group, D represents

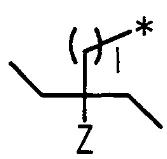

or

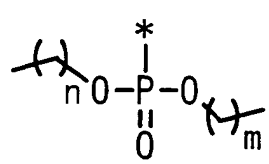

l represents 0 or 1, n and m independently represent an integer from 1 to 6, Z represents a hydrogen atom or

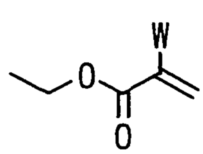

W represents a hydrogen atom or a methyl group, and the asterisk represents the bond which binds to the hydroxyl

group);

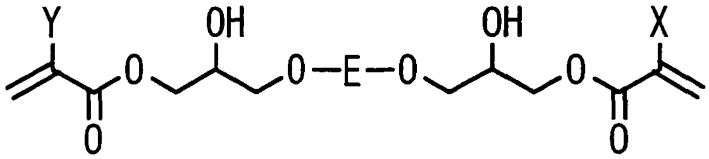

(3)

(wherein E represents

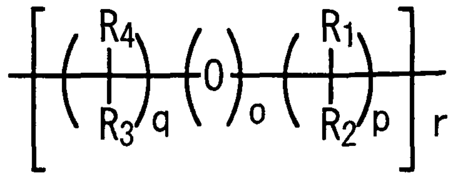

or

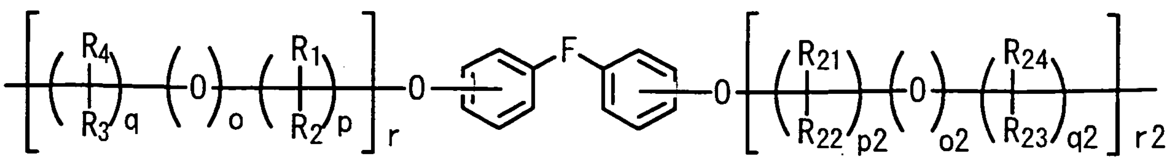

F represents one type selected from

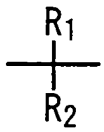 , 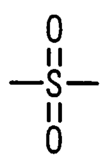 , 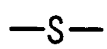

$R_1$ to $R_4$, $R_{21}$ to $R_{24}$ independently represent a hydrogen atom, a methyl group or a hydroxyl group, o and o2 represent 0 or 1, and p, q, r, p2, q2 and r2 independently represent an integer from 1 to 3);

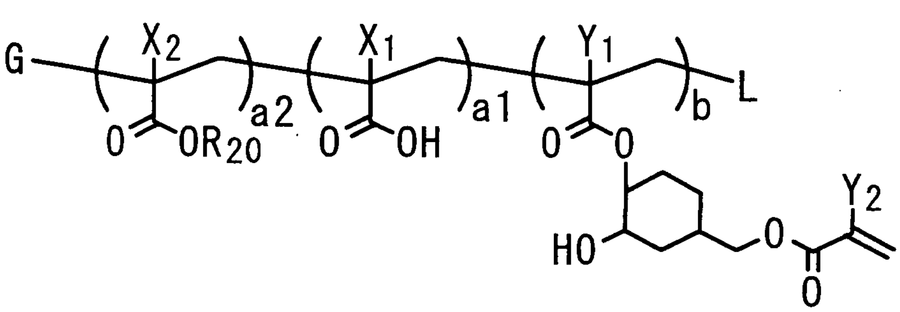

(4)

(wherein G represents

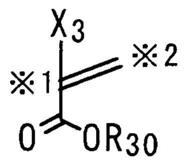 or 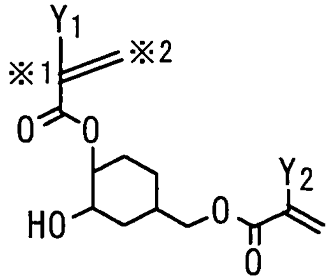 ,

L represents

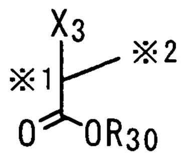 or 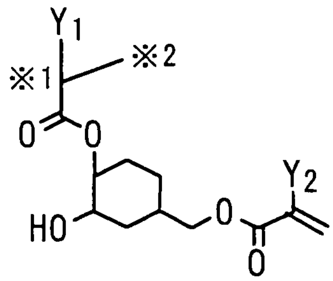 ,

$X_1$, $X_2$, $X_3$, $Y_1$ and $Y_2$ independently represent a hydrogen atom or a methyl group, $R_{20}$ and $R_{30}$ independently represent a hydrogen atom, a methyl group, an ethyl group a hydroxyethyl group or a hydroxypropyl group, a1, a2 and b independently represent an integer from 1 to 1000, and ※1 and ※2 represent a binding site capable of forming a bond with a residue except for G and L in the compound represented by the above-mentioned general formula (4)); and

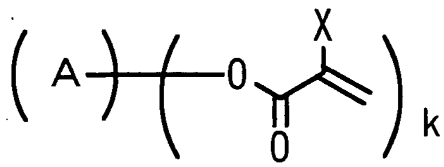 (5)

(wherein A represents

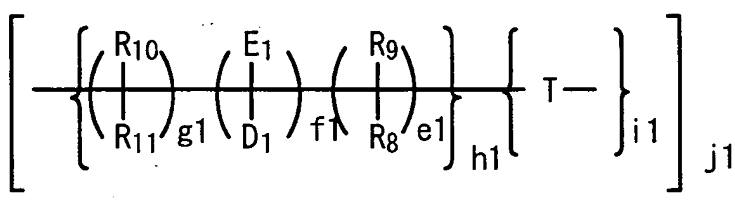

or

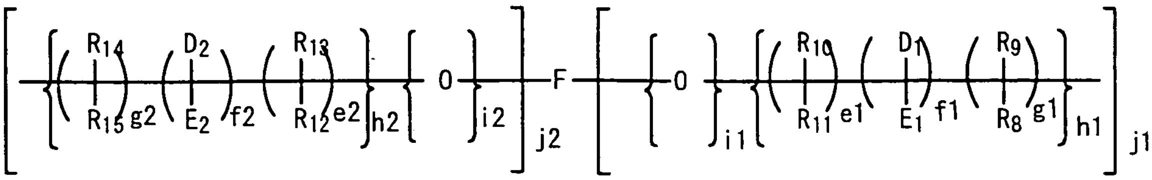

$D_1$, $D_2$, $E_1$ and $E_2$ independently represent a hydrogen atom, a methyl group, an ethyl group, a (meth)acryloyloxy group or a (meth)acryloyloxymethyl group, $R_8$ to $R_{15}$ independently represent a hydrogen atom or a methyl group, e1, e2, g1, g2, i1 and i2 independently represent an integer from 0 to 2, f1, f2, h1, h2, j1 and j2 independently represent an integer from 1 to 4, X represents a hydrogen atom or methyl, and k represents an integer from 2 to 6, T is selected from an oxygen atom and an ester bond,

F represents an oxygen atom, an ester bond or a group selected from the following general formula (6) to general formula (18) :

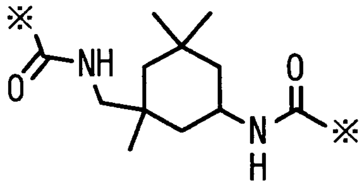

(6)

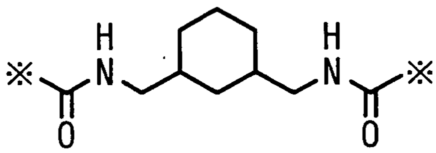

(7)

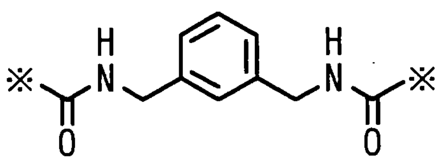

(8)

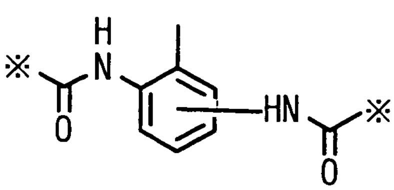

(9)

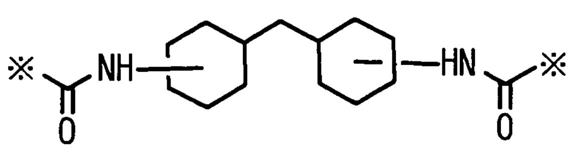

(10)

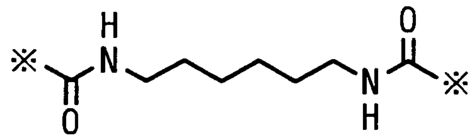

(1 1)

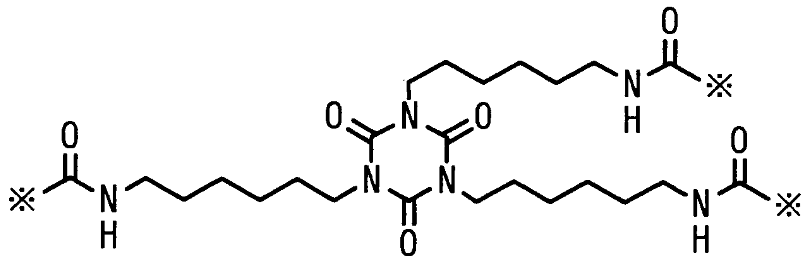

(1 2)

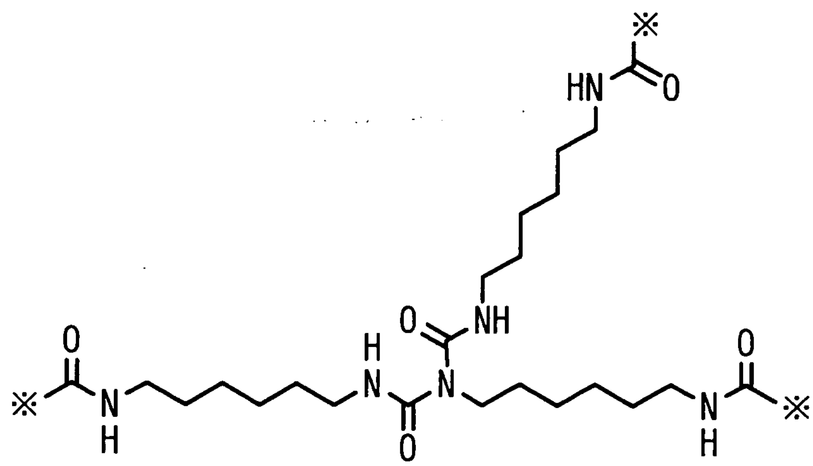

(1 3)

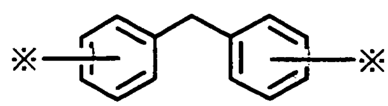

(1 4)

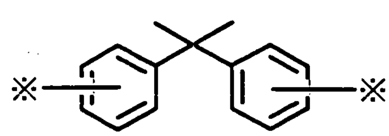

(1 5)

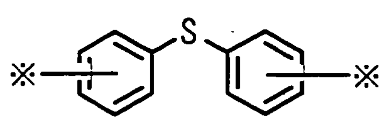

(1 6)

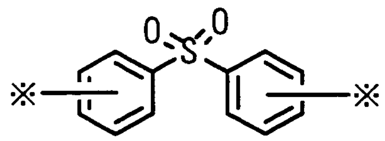

(1 7)

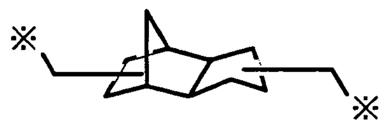

(1 8)

wherein ※ represents a bond);

(3) an antifouling material comprising a copolymer obtained by copolymerizing the composition described in the above-mentioned (1) which further comprises a compound represented by the following general formula (19):

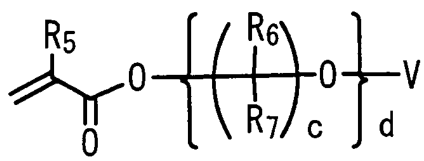

(19)

(wherein $R_5$ represents a hydrogen atom or a methyl group, $R_6$ and $R_7$ independently represent a hydrogen atom, a methyl group or an ethyl group, c represents an integer from 2 to 6, d represents an integer from 0, to 3, V represents a hydrogen atom, a methyl group or

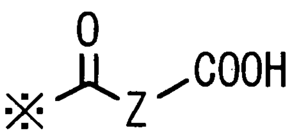

、

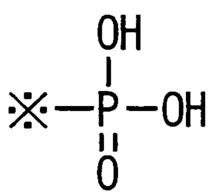

or

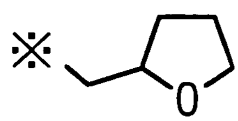

Z represents an alkylene group having 1 to 10 carbon atoms, a cycloalkylene group having 4 to 10 carbon atoms, or a phenylene group, and ※ represents a bond which binds to the oxygen atom);

(4) the antifouling material described in the above-mentioned (2), wherein the transparency value of the copolymer obtained by copolymerizing the composition described in the above-mentioned (2) is from 0.1 to 5.0;

(5) the antifouling material described in the above-mentioned (3), wherein the transparency value of the copolymer obtained by copolymerizing the composition described in the above-mentioned (3) is from 0.1 to 5.0;

(6) a copolymer obtained by copolymerizing a composition described in the above-mentioned (2);

(7) a copolymer obtained by copolymerizing a composition described in the above-mentioned (3);

(8) a laminated film characterized in that a polymer layer having a water contact angle of 45 degrees or less comprising a copolymer of a compound represented by the general formula (1) and a compound having at least one hydroxyl group and two or more (meth) acryloyl groups in the molecule is formed on one surface of a base material film:

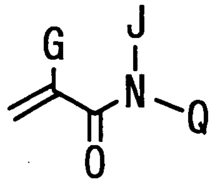

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$, with the proviso that the case where J and Q are simultaneously a combination of a hydrogen atom and a hydrogen atom, a combination of a hydrogen atom and a methyl group or a combination of a methyl group and a methyl group is excluded);

(9) the laminated film described in the above-mentioned (8) characterized by having an adhesive layer on the surface of the base material film on which the polymer layer is not formed;

(10) the laminated film described in the above-mentioned (9) characterized in that a release film is laminated on the surface of the adhesive layer laminated on the base material film;

(11) the laminated film described in any one of the above-mentioned (8) to (10) characterized in that a releasable protective layer is laminated on the surface of the polymer layer having a water contact angle of 45 degrees or less;

(12) the laminated film described in the above-mentioned (8) characterized in that the laminated film can be obtained by forming a coating layer comprising a composition containing a compound represented by the general formula (1) and a compound having at least one hydroxyl group and two or more (meth) acryloyl groups in the molecule on one surface of a base material film, covering the surface of the coating layer with a cover film having a water contact angle of the surface to be in contact with the coating layer of 55 degrees or less, and then irradiating the coating layer with radiation;

(13) an antifouling film comprising a laminated film described in any one of the above-mentioned (8) to (12);

(14) a method for producing a laminated film characterized by forming a coating layer comprising a composition containing a compound represented by the general formula (1) and a compound having at least one hydroxyl group and two or more (meth) acryloyl groups in the molecule on one surface of a base material film, covering the surface of the coating layer with a cover film having a water contact angle of the surface to be in contact with the coating layer of 55 degrees or less, and then irradiating the coating layer with radiation, whereby the composition coating layer is copolymerized:

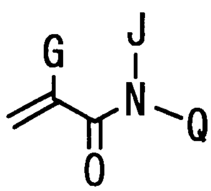

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$, with the proviso that the case where J and Q are simultaneously a combination of a hydrogen atom and a hydrogen atom, a combination of a hydrogen atom and a methyl group or a combination of a methyl group and a methyl group is excluded);

(15) the method for producing a laminated film described in the above-mentioned (14) characterized in that the cover film is a film having a layer comprising a vinyl alcohol-based polymer on the surface to be in contact with the composition coating layer;

(16) the method for producing a laminated film described in the above-mentioned (14) or (15) characterized by having an adhesive layer on the other side of the surface of the base material film;

(17) the method for producing a laminated film described in the above-mentioned (16) characterized by laminating a release film on the surface of the adhesive layer;

(18) the method for producing an antifouling film described in any one of the above-mentioned (14) to (17), wherein the laminated film is an antifouling film;

(19) a cladding material comprising an antifouling film described in the above-mentioned (13);

(20) an antifouling member characterized in that an antifouling film described in the above-mentioned (13) is disposed on the surface thereof;

(21) a guide plate or a sign board comprising an antifouling film described in the above-mentioned (13) laminated on the surface;

(22) an exterior wall comprising an antifouling film described in the above-mentioned (13) laminated on the surface; and

(23) a window glass comprising an antifouling film described in the above-mentioned (13) laminated on the surface.

Brief Description of the Drawings

Fig. 1 shows a schematic view of a method for loop tack test.
Fig. 2 shows a schematic view of a method for 180-degree peel adhesion measurement test.

Best Mode for Carrying Out the Invention

Hereunder, the present invention will be explained more specifically.

The antifouling material according to the present invention comprises a copolymer obtained by copolymerizing a composition containing a compound represented by the following general formula (1) and a compound having at least two (meth)acryloyl groups in the molecule.

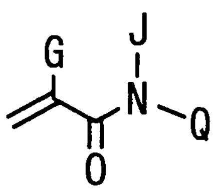 (1)

In the general formula (1), G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$. However, J and Q are not a combination of a hydrogen atom and a hydrogen atom, a combination of a hydrogen atom and a methyl group or a combination of a methyl group and a methyl group.

The compound represented by the general formula (1) is a known compound and can be produced by the methods described in JP-A-61-52, JP-B-48-19295, JP-A-2001-206912 and the like. N-methylolacrylamide belonging to the compound represented by the general formula, (1) can be obtained as a commercial product.

Among the compounds represented by the general formula (1), N-methylolacrylamide, 2-hydroxyethyl(meth) acrylamide, 3-hydroxypropyl (meth)acrylamide, 2,3-dihydroxypropyl (meth)acrylamide, N,N-bis(2-hydroxyethyl) (meth) acrylamide are preferred compounds because their production is easy. These compounds can be used alone or in combination of 2 or more.

The compound having at least two (meth)acryloyl groups in the molecule is a compound having two or more (meth) acryloyl groups in the molecule, and the (meth)acryloyl group may be present as a (meth)acryloyloxy group, a (meth)acryloylthio group or a (meth) acrylamide group in the molecule. Among these, the (meth) acryloyloxy group and the (meth) acrylamide group are preferred, and the (meth)acryloyloxy group is particularly preferred.

Examples of the compound having at least two (meth)acryloyl groups in the molecule include compounds

represented by the general formula (2) to the general formula (5).

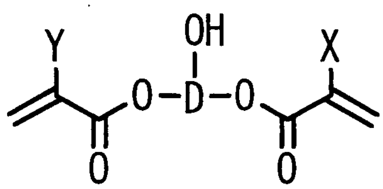

(2)

In the general formula (2), X and Y independently represent a hydrogen atom or a methyl group, D represents

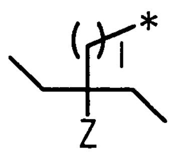

or

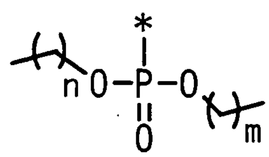

,

l represents 0 or 1, n and m independently represent an integer from 1 to 6, preferably an integer from 2 to 4, more preferably an integer from 2 to 3. Z represents a hydrogen atom or

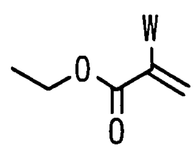

W represents a hydrogen atom or a methyl group. The asterisk represents the bond which binds to the hydroxyl group.

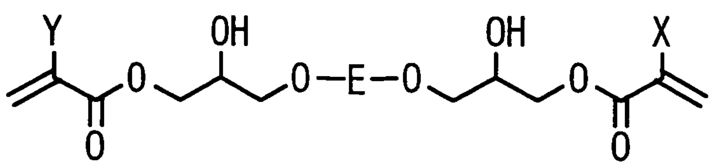

(3)

In the general formula (3), E represents

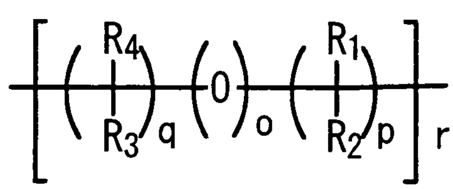

or

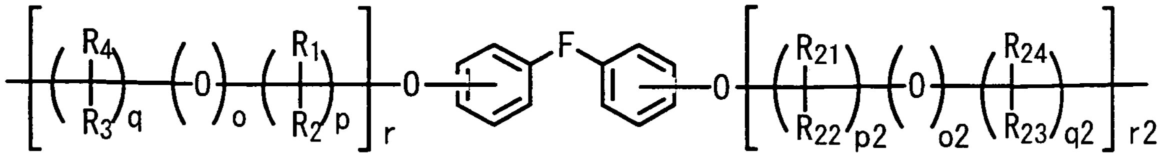

F represents one type optionally selected from

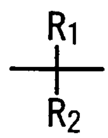 , 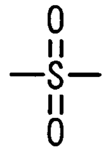 , 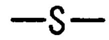

$R_1$ to $R_4$, $R_{21}$ to $R_{24}$ independently represent a hydrogen atom, a methyl group or a hydroxyl group. o and o2 represent 0 or 1, and p, q, r, p2, q2 and r2 independently represent an integer from 1 to 3.

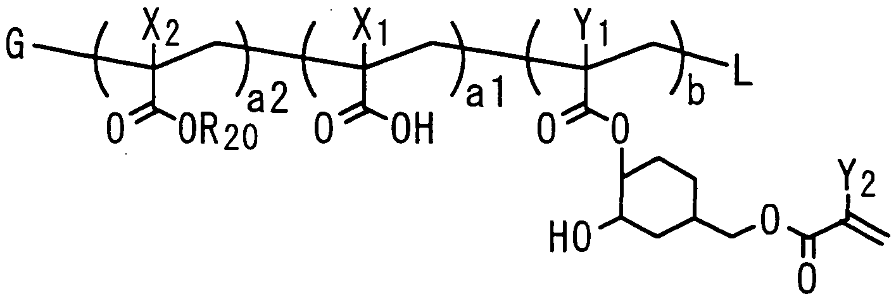

(4)

In the general formula (4), G represents

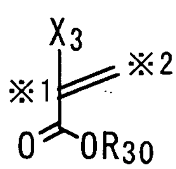

or

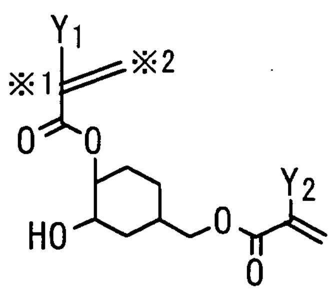

,

L represents

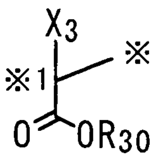

or

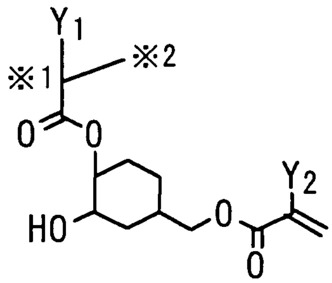

,

$X_1$, $X_2$, $X_3$, $Y_1$ and $Y_2$ independently represent a hydrogen atom or a methyl group, $R_{20}$ and $R_{30}$ independently represent a hydrogen atom, a methyl group, an ethyl group a hydroxyethyl group or a hydroxypropyl group, a1, a2 and b independently represent an integer from 1 to 1000, preferably an integer from 1 to 300, more preferably an integer from 1 to 100. Incidentally, ※1 and※2 represent a binding site capable of forming a bond with a residue except for G and L in the compound represented by the above-mentioned general formula (4).

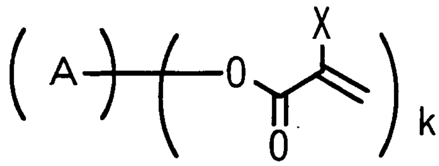

(5)

In the general formula (5), A represents

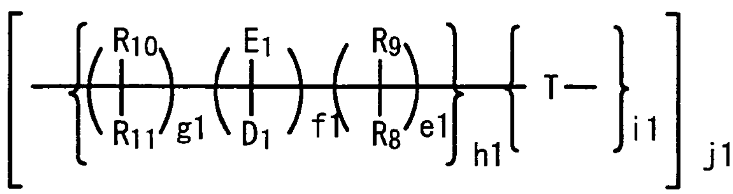

or

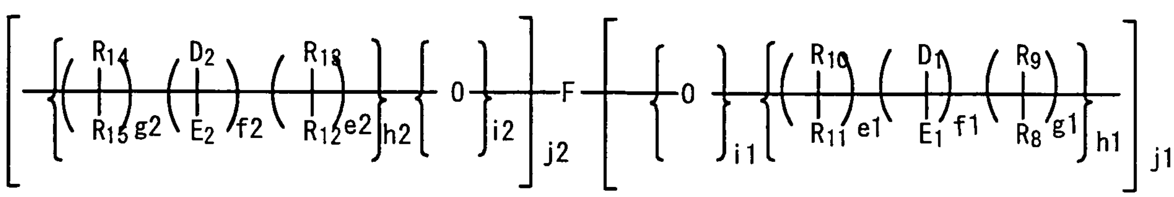

However, $D_1$, $D_2$, $E_1$ and $E_2$ independently represent a hydrogen atom, a methyl group, an ethyl group, a (meth) acryloyloxy group or a (meth)acryloyloxymethyl group. $R_8$ to $R_{15}$ independently represent a hydrogen atom or a methyl group. e1, e2, g1, g2, i1 and i2 independently represent an integer from 0 to 2, f1, f2, h1, h2, j1 and j2 independently represent an integer from 1 to 4, preferably an integer from 1 to 3, more preferably an integer from 1 to 2. X represents a hydrogen atom or methyl, and k represents an integer from 2 to 6, preferably an integer from 2 to 4, more preferably an integer from 2 to 3.

T is selected from an oxygen atom and an ester bond.

F represents an oxygen atom, an ester bond or a group selected from the following general formula (6) to general formula (18) :

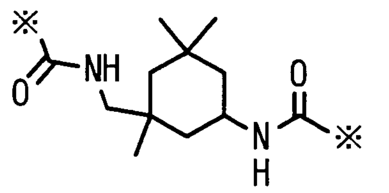

(6)

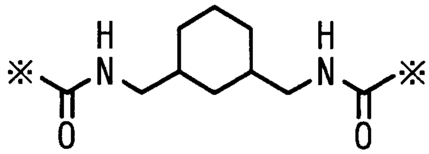

(7)

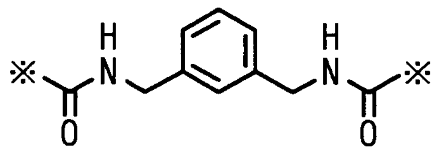

(8)

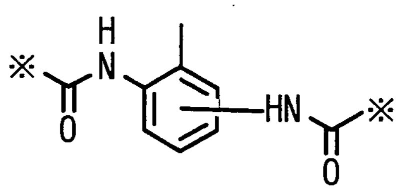

(9)

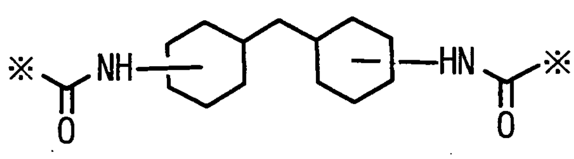

(10)

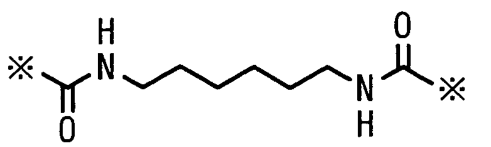

(11)

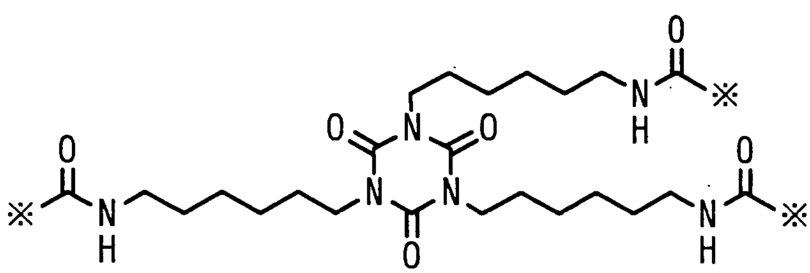

(12)

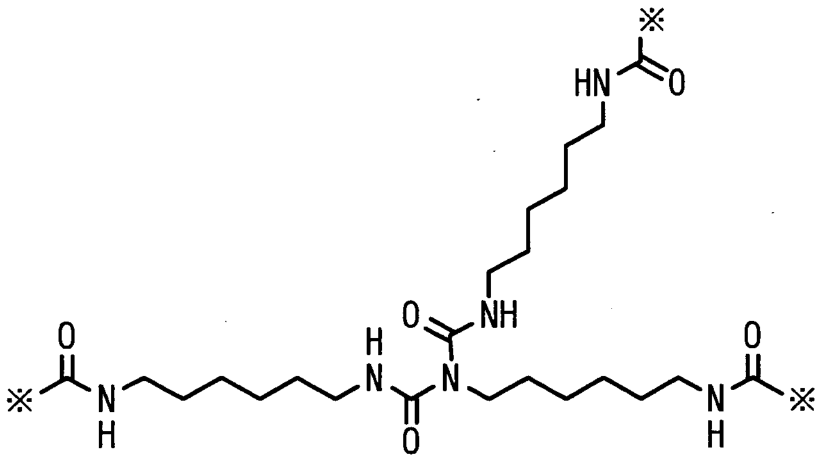

(1 3)

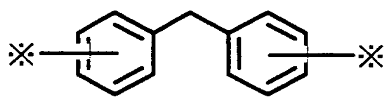

(1 4)

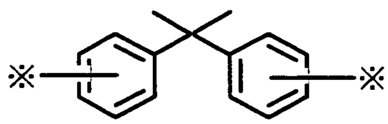

(1 5)

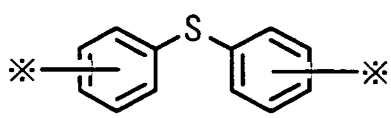

(1 6)

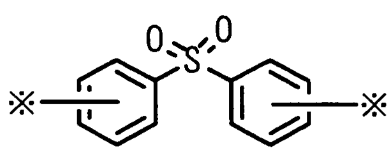

(1 7)

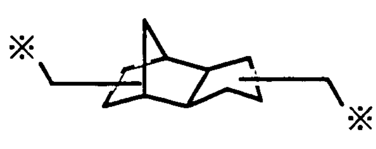

(1 8)

※ represents a bond.

The compounds represented by the general formula (2) to the general formula (5) can be produced by a known method, however, they can be obtained as a commercial product. In addition, among the above-mentioned compounds, a compound having two or more (meth)acryloyl groups and at least one hydroxyl group in the molecule is preferably used.

A copolymer obtained by copolymerizing a composition containing a compound represented by the general formula (1) and at least one compound selected from compounds represented by the general formula (2) to the general formula (5) is preferably used in the antifouling material.

A copolymer obtained by copolymerizing a composition containing a compound represented by the general formula (1) and a compound having at least two (meth)acryloyl groups in the molecule and further a composition containing a compound represented by the following general formula (19) is also preferably used as the antifouling material of the present invention.

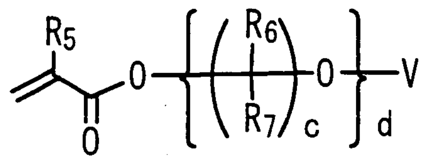

(19)

(In the formula, $R_5$ represents a hydrogen atom or a methyl group, $R_6$ and $R_7$ independently represent a hydrogen atom, a methyl group or an ethyl group, c represents an integer from 2 to 6, d represents an integer from 0 to 3, V represents a hydrogen atom, a methyl group or

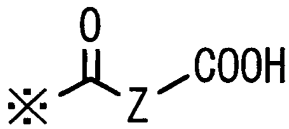

、

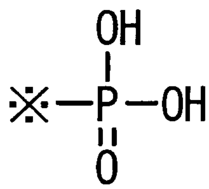

or

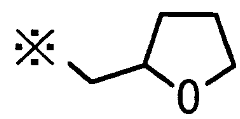

Z represents an alkylene group having 1 to 10 carbon atoms, a cycloalkylene group having 4 to 10 carbon atoms, or a phenylene group, and ※ represents a bond which binds to the oxygen atom.)

A copolymer obtained by copolymerizing a composition containing a compound represented by the general formula (1), at least one or more compounds selected from compounds represented by the general formula (2) to the general formula (5) and a compound represented by the general formula (19) is preferred as the antifouling material.

When the transparency value of a copolymer obtained by copolymerizing a compound represented by the general formula (1) and any one compound selected from compounds represented by the general formula (2) to the general formula (5), or the transparency value of a copolymer obtained by copolymerizing a compound represented by the general formula (1) and two or more compounds selected from compounds represented by the general formula (2) to the general formula (5) is from 0.1 to 5.0, the transparency of the obtained copolymer and an antifouling material to be formed with the copolymer is improved, therefore, it is preferred. The transparency value is more preferably from 0.1 to 4.0, and particularly preferably' from 0.1 to 3.0. Such a copolymer is preferably used in an antifouling material in which transparency is required such as a clearcoat, an optical material, a transparent building material or a transparent film.

In addition, when the transparency value of a copolymer obtained by copolymerizing a compound represented by the general formula (1), a compound having at least two (meth)acryloyl groups in the molecule and a compound represented by the general formula (19) is from 0.1 to 5.0, the transparency of the obtained copolymer and an antifouling material to be formed with the copolymer is improved, therefore, it is preferred. The transparency value is more preferably from 0.1 to 4.0, and particularly preferably from 0.1 to 3.0.

A copolymer which is obtained by copolymerizing a compound represented by the general formula (1), at least one compound selected from compounds represented by the general formula (2) to the general formula (5) and a compound represented by the general formula (19) and has a transparency value of 0.1 to 5.0 is also preferably used in an antifouling material in which transparency is required such as a clearcoat, an optical material, a transparent building material or a transparent film.

Incidentally, the transparency value in the present invention means a numerical value calculated by the following calculation formula.

$$\text{Transparency value} = (-0.001a1+0.007a2+0.002a3) +$$

$$(0.142b1-0.108b2-0.615b3) + (-0.105c1+0.038c2+0.652c3) +$$

$$(0.270d1+0.044d2+0.382d3) + (0.061e2-0.426e3) +$$

$$(0.058f1-0.064f2-0.034f3) + (0.016h1-0.017h2-0.040h3) +$$

$$(-0.094k1+0.673k2+1.399k3) + 0.029$$

Incidentally, the details of the respective variables and parameters in the above-mentioned calculation formula are as follows.

In the following, Compound I indicates a compound represented by the general formula (1), Compound II-1 indicates a compound having at least two (meth)acryloyl groups in the molecule, preferably a compound selected from the general formulae (2) to (5), and Compound II-2 indicates a compound represented by the general formula (19). In a system in which both Compound II-1 and Compound II-2 are used, the above-mentioned transparency value is the transparency value of a copolymer obtained by copolymerizing Compound I, Compound II-1 and Compound II-2. In addition, in a system in which Compound II-2 is not used, calculation is performed by assuming all the physical values derived from Compound II-2 to be 0.

a1: solubility parameter of Compound I
a2: solubility parameter of Compound II-1
a3: solubility parameter of Compound II-2
b1: density of Compound I
b2: density of Compound II-1
b3: density of Compound II-2
c1: dipole moment of Compound I
c2: dipole moment of Compound II-1
c3: dipole moment of Compound II-2
d1: (ClogP of Compound I) - (ClogP of Compound II-1)
d2: (ClogP of Compound II-1) - (ClogP of Compound II-2)
d3: (ClogP of Compound II-2) - (ClogP of Compound I)
e2: number of crosslinkable functional groups of Compound II-1
e3: number of crosslinkable functional groups of Compound II-2
f1 : (amount of Compound I) x 10/ ((amount of Compound I) + (amount of Compound II-1) + (amount of Compound II-2))
f2: (amount of Compound II-1) x 10/ ((amount of Compound I) + (amount of Compound II-1) + (amount of Compound II-2))
f3: (amount of Compound II-2) x 10/((amount of Compound I) + (amount of Compound II-1) + (amount of Compound II-2))
h1: surface tension of Compound I
h2: surface tension of Compound II-1
h3: surface tension of Compound II-2
k1: number of OH groups of Compound I
k2: number of OH groups of Compound II-1
k3: number of OH groups of Compound II-2

Solubility parameter

A solubility parameter is calculated for each compound by a program for predicting a physical property, CHEOPS ver. 4.0 (MillionZillion Software, Inc). The unit is $(J/cm^3)^{1/2}$.

Density

Similarly, calculation is performed for each compound by CHEOPS ver. 4.0 (MillionZillion Software, Inc.), and the unit is converted into $g/cm^3$.

ClogP

ClogP is calculated from a chemical structure formula using a program for predicting logP of CS Chem3D Ultra ver. 7.0.0 (CambridgeSoft Inc.) for each compound.

Dipole moment

Calculation is performed by PM3 method of MOPAC ver. 2. 20CAChe contained in CAChe (Fujitsu Co.) for each compound.

Number of crosslinkable functional groups

The number of (meth)acryloyl groups in the molecule of a compound is defined as the number of crosslinkable functional groups.

Surface tension

Calculation is performed based on a structural formula using CHEOPS ver. 4 .0 (MillionZillion Software, Inc.) for each compound. The unit is mN/m.

Number of OH groups

It is the number of OH groups in one molecule of a compound.

Incidentally, in the calculation of any parameter, in the case where there are plural compounds in the respective compounds (I, II-1 and II-2), a weighted average value for the blending ratio of the respective compounds is incorporated into the calculation formula.

Among the compounds represented by the general formula (2) to the general formula (5), examples of the compound to form the above-mentioned copolymer with a transparency value of 0.1 to 5.0 include 1-acryloyloxy-2-hydroxy-3-methacryloyloxy-propane, 2-hydroxypropyl-1,3-di(meth)acrylate, pentaerythritol tri(meth)acrylate, bis [4-[6-(meth)acryloyloxy-5-hydroxy-2-methyl-3-oxahexyloxy]phenyl]-1,1-propane, 1,10-di(meth)acryloyloxy-2,9-dihydroxy-4,7- dioxadecane and Cyclomer-P (trade name, Daicel Chemical Industries, Ltd).

Among the compounds represented by the general formula (19), examples of the compound to form the above-mentioned copolymer with a transparency value of 0.1 to 5.0 include (meth)acrylic acid, 2-hydroxyethyl (meth) acrylate, 2-hydroxypropyl (meth)acrylate, 3-hydroxypropyl (meth) acrylate, 2-hydroxybutyl (meth) acrylate, (meth)acryloyloxyethyl succinate, (meth)acryloyloxyethyl hexahydrophthalate and (meth)acryloyloxyethyl phosphate.

The mixing ratio of the respective compounds in the respective compositions described above is not particularly limited. The mixing ratio of the respective compounds in the respective compositions described above can be appropriately determined according to a property required for a copolymer obtained by copolymerizing them.

For example, by copolymerizing a composition in which, a compound represented by the general formula (1) and a compound having at least two (meth)acryloyl groups in the molecule are mixed at a ratio in the range of 2:8 to 8:2 in terms of weight ratio, a copolymer having a water contact angle of, for example, 5 to 45 degrees can be obtained.

A copolymer of the present invention can be obtained by copolymerizing the above-mentioned composition.

There is no restriction on a method of copolymerizing the above-mentioned composition, and a known method can be used. A polymerization reaction with heat or radiation is generally carried out, however, both heat and radiation can be used in combination. The polymerization reaction of the above-mentioned composition can be carried out in the atmosphere, however, it is preferred to carry out the reaction in an inert gas atmosphere such as nitrogen for the purpose of reducing the polymerization time. When the above-mentioned composition is copolymerized, generally, a known polymerization initiator can be added to the composition for the purpose of improving the polymerization rate, or a solvent can be used for the purpose of adjusting the viscosity or the like.

In the case where the above-mentioned composition is copolymerized with heat, generally, a radical generating agent such as an organic peroxide is added to the composition and the composition is heated to the range of room temperature to 300°C or lower.

In the case where the above-mentioned composition is copolymerized with radiation, the radiation to be used is not particularly limited as long as it is an energy beam with a wavelength in the range of 0.0001 to 800 nm, and examples thereof include α-rays, β-rays, γ-rays, X-rays, visible light, ultraviolet light, electron beams and the like. The radiation to be used can be appropriately selected according to the compound contained in the above-mentioned composition, however, visible light with a wavelength in the range of 400 to 800 nm, ultraviolet light with a wavelength in the range of 50 to 400 nm and electron beams with a wavelength in the range of 0.01 to 0.002 nm are preferred

because they are easy to handle and are generally in common use. In the case where high energy is needed for a polymerization reaction, an electron beam is used in many cases, though the apparatus is expensive. In addition, in the case where the above-mentioned composition is cured with an electron beam, a polymerization initiator is not generally needed.

In the case where the above-mentioned composition is copolymerized with ultraviolet light, a known photopolymerization initiator such as a photo-cationic polymerization initiator, a photo-anionic polymerization initiator or a photo-radical polymerization initiator is used, and in particular, a photo-radical polymerization initiator is preferably used.

As the photopolymerization initiator to be preferably use, Darocur 1173 (manufactured by Ciba Speciality Chemicals Inc.), Irgacure 651 (manufactured by Ciba Speciality Chemicals Inc.), benzophenone, 4-phenylbenzophenone, Irgacure 500 (manufactured by Ciba Speciality Chemicals Inc.), Esacure KT 55 (manufactured by Lamberti Co.), Esacure KTO/46 (manufactured by Lamberti Co.) and Esacure 1001 (manufactured by Lamberti Co) are exemplified.

The amount of such a photopolymerization initiator to be used for the total weight of the compound represented by the general formula (1) and the compound having at least two (meth) acryloyl groups in the molecule or for the total weight of the compound represented by the general formula (1), the compound having at least two (meth)acryloyl groups in the molecule and the compound represented by the general formula (19) is preferably in the range of 0.1 to 20 wt%, more preferably in the range of 0 . 5 to 10 wt%, further more preferably in the range of 1 to 5 wt%.

For example, in the case where the above-mentioned composition is copolymerized using ultraviolet light in the atmosphere in the presence of oxygen that is a polymerization inhibitor, it is preferred to use an initiator and a polymerization accelerator in combination.

Examples of the polymerization accelerator include a compound having an N,N-disubstituted amino group other than the compound represented by the general formula (1), a compound having a mercapto group and a compound having an ether structure.

In particular, a compound having an N,N-disubstituted amino group and further having a carbon-carbon double bond in the molecule other than the compound represented by the general formula (1) is preferred for the purpose of improving the polymerization degree or polymerization rate, and moreover of enabling the avoidance of a bleeding out of itself. Examples thereof include N,N-dimethylaminoethyl (meth)acrylate and N-(meth)acryloyl morpholine.

These polymerization accelerators can be used alone or in combination of two or more.

The amount of the polymerization accelerator to be used for the total weight of the compound represented by the general formula (1) and the compound having at least two (meth) acryloyl groups in the molecule or for the total weight of the compound represented by the general formula (1), the compound having at least two (meth)acryloyl groups in the molecule and the compound represented by the general formula (19) is preferably in the range of 0.5 to 20 wt%, more preferably in the range of 1 to 10 wt%.

When the above-mentioned composition is copolymerized, a solvent can be used as needed.

As the solvent to be preferably used, for example, a polar solvent including water, a lower alcohol such as methanol, a mixture of water and a lower alcohol and the like are exemplified.

The amount of the solvent to be used is not particularly limited and can be appropriately determined in view of economic efficiency or the like.

By copolymerizing the above-mentioned composition in various shaped molds, molded products in various shapes can be obtained. A film is produced using the above-mentioned composition, and this film can be adhered to the surface of a target article. In addition, after the above-mentioned composition is coated to the surface of a base material, the composition is copolymerized, whereby a film-shaped layer can be formed on the surface of the base material. The surface of the base material can be subjected to a surface treatment such as a corona treatment as needed.

The copolymer of the present invention has a hydrophilicity and an antistatic property, therefore, it can be used as a hydrophilicity material. Among the copolymers of the present invention, a copolymer having a water contact angle of 5 to 45 degrees can be used in particularly an antifouling material in which a self-cleaning property is required. In this case, it is preferred that a compound having at least two (meth) acryloyl groups in the molecule further has at least one hydroxyl group.

In addition, a copolymer having a water contact angle of 5 to 20 degrees can be used in an anti-fogging material in which an anti-fogging property is required and an antistatic material.

Examples of the antifouling material, the anti-fogging material and the antistatic material include building materials, cladding materials for building materials, furniture materials, cladding materials for furniture materials, materials for cooling fins such as heat exchangers, cladding materials for cooling fins such as heat exchangers, optical materials for eyeglasses, contact lenses, goggles and the like, cladding materials for optical materials, window materials for buildings, vehicles and the like, cladding materials for window materials and mirror materials, engineering materials for water service pipes, cladding materials for engineering materials, interior materials for aircrafts and vessels, cladding materials for interior materials for aircrafts and vessels, vehicle materials for cars and the like, cladding materials for vehicle materials, materials for utensils such as sinks or plates, cladding materials for utensils, bathroom materials

and cladding materials therefor, materials for cosmetic containers and cladding materials therefor, materials for lighting apparatuses and cladding materials therefor, materials for electric appliances and cladding materials therefor, materials for recording and printing such as photoresists and inkjet recording plates, cement additives, materials for treating fiber, antistatic materials and the like.

The above-mentioned composition can be used as a coating material to be used in coating the surface of a desired article.

To the above-mentioned composition, another polymerizable compound or an additive such as an internal mold release agent can be added as needed. For example, a polymerizable compound having a sulfur atom as a copolymerization component for improving the refractive index of a resin, a salt of a metal such as silver or lithium, an organic metal salt such as an alkali metal salt of (meth) acrylic acid, iodine or an iodonium salt for imparting a bactericidal or antibacterial action can be added to the above-mentioned composition.

In particular, it is preferred that the above-mentioned copolymer is laminated on a base material film as a polymer layer and is used as a laminated film.

There is no restriction on the base material film constituting the laminated film of the present invention, as long as it is in a sheet form or a film form comprising a thermosetting resin, a thermoplastic resin, paper or the like, or may be non-woven fabric or foam. Among these base material films, a film comprising a thermoplastic resin is preferred because it is excellent in transparency, formability, mechanical strength and the like.

As the thermoplastic resin to form a base material film, a known thermoplastic resin, for example, polyolefin (e.g., polyethylene, polypropylene, poly-4-methyl- 1-pentene, polybutene, etc.), polyester (e.g., polyethylene terephthalate, polybutylene terephthalate, polyethylene naphthalate, etc.), polyamide (e.g., nylon 6, nylon 66, polymetaxyleneadipamide, etc.), polyvinyl chloride, polyimide, an ethylene-vinyl acetate copolymer or a saponified product thereof, polyvinyl alcohol, polyacrylonitrile, polycarbonate, polystyrene, ionomer, a mixture thereof and the like can be exemplified. Among these, a thermoplastic resin with a good stretching property and transparency such as polypropylene, polyethylene terephthalate or polyamide is preferred. In addition, the base material film comprising a thermoplastic resin may be a non-oriented film, a uniaxially oriented film or a biaxially oriented film, however, a biaxially oriented film is preferred because it is excellent in transparency, mechanical strength and the like. In order to imparting a weather resistance property to the base material film, it is preferred to add a known weather resistant stabilizer, for example, a benzophenone-based, benzotriazole-based, benzoate-based, oxanilide-based ultraviolet absorbent to the base material film.

It is preferred that the surface of the base material film to be used in the present invention is subjected to a surface-activating treatment such as a corona treatment, a frame treatment, a plasma treatment or an undercoating treatment in order to improve the adhesive property (adherence) to the composition containing a compound represented by the general formula (1) and a compound having at least one hydroxyl group and two or more (meth)acryloyloxy groups in the molecule (further a polymer of these monomers) .

The base material film can be provided with an adhesive layer described below on the surface where the composition comprising a compound represented by the general formula (1) and a compound having at least one hydroxyl group and two or more (meth) acryloyloxy groups in the molecule is not laminated, and further it can be provided with a release film on the surface of the adhesive layer.

With regard to the base material film on which a polymer layer obtained by copolymerizing the composition containing a compound represented by the general formula (1) and a compound having at least one hydroxyl group and two or more (meth)acryloyloxy groups in the molecule is laminated, the surface where the polymer layer is not laminated can be provided with an adhesive layer. An adhesive to be used in the adhesive layer is not particularly limited, and a known adhesive can be used. Examples of the adhesive include an acrylic-based adhesive, a rubber-based adhesive, a vinyl ether polymer-based adhesive, a silicone adhesive and the like.

As the acrylic-based adhesive, for example, an acrylic-based polymer obtained by copolymerizing a main monomer of acrylic ester such as ethyl acrylate, isooctyl acrylate, isononyl acrylate, 2-ethylhexyl acrylate (2HEMA), n-butyl acrylate, butyl methacrylate, 2-ethylhexyl methacrylate with, as a cohesion regulator, methyl acrylate, vinyl acetate, styrene or the like is exemplified.

As the rubber-based adhesive, for example, the one obtained by adding, as a tackifer, a rosin derivative resin having a low molecular weight to a polyisoprene-based natural rubber, a synthetic rubber such as a styrene-butadiene copolymer rubber (SBR) or a polyisobutylene-rubber, isobutylene-isoprene copolymer rubber, a styrene-butadiene block copolymer, a styrene-isoprene block copolymer, a hydrogenated product thereof, a thermoplastic elastomer such as an ethylene-$\alpha$-olefin random copolymer and the like is exemplified.

In addition, as the adhesive, a vinyl ether polymer-based adhesive such as polyvinyl methyl ether, polyvinyl ethyl ether or polyisobutyl ether, a silicone adhesive such as a methyl silicone-based adhesive or the like can be used.

In particular, the acrylic-based adhesive (weight-average molecular weight: about 600,000 to 2,000,000) is preferred because it is excellent in adherence to the base material film, weather resistance and durability, and particularly preferably is a solvent type excellent in water resistance. In addition, to the adhesive, a crosslinking agent such

as an epoxy-based compound or an isocyanate compound, or a plasticizer such as a phthalate ester or an adipate ester may be added in order to adjust the adhesive strength.

On the surface of the adhesive layer formed by applying an adhesive as described above, a release film can be laminated. There is no restriction on the release film, and various known release films can be used. The base material of the release film may be a thermoplastic film or paper. As a specific example of the release film, for example, a film obtained by laminating a curing dimethyl silicone (platinum catalyst) on the corona-treated surface of polyethylene terephthalate (PET, thickness: 38 μm) as a base material film can be exemplified.

The laminated film of the present invention has a polymer layer obtained by copolymerizing the composition of the above-mentioned compound represented by the general formula (1) and the above-mentioned compound having at least one hydroxyl group and two or more (meth) acryloyloxy groups in the molecule on one surface of the above-mentioned base material film, and the water contact angle of this polymer layer is 45 degrees or less. Incidentally, in the present invention, the water contact angle of the laminated film is the water contact angle of the surface of a layer, which has been protected with a cover film, right after the cover film is removed from the produced laminated film. The water contact angle of this layer varies depending on the remaining amount of unreacted monomers, the amount of a polymerization initiator, a polymerization accelerator or the like. Generally, when the surface of this layer is washed with water, unreacted monomers or the like are washed away, whereby there is a tendency that the water contact angle somewhat increases. Incidentally, as long as polymerization (crosslinking) of the composition is sufficiently carried out, after the surface is washed with water once, the water contact angle of this layer does not vary much.

As a method of forming a polymer layer on one surface of a base material film, it is preferred that a composition is prepared by mixing the above-mentioned compound represented by the general formula (1) and the above-mentioned compound having at least one hydroxyl group and two or more (meth) acryloyloxy groups in the molecule, this composition is coated on one surface of a base material film, a specific cover film is applied thereon, and this composition is cured. In this case, the mixing ratio, in the composition, of the above-mentioned compound represented by the general formula (1) and the above-mentioned compound having at least one hydroxyl group and two or more (meth) acryloyloxy groups in the molecule cannot generally be specified, however, it is not limited as long as it is a combination of the compounds having such mixing ratio that the water contact angle of the polymer layer obtained by copolymerizing the composition by a method described later is 45 degrees or less.

For example, in the case where the ratio of N- (2, 3-dihydroxypropyl)-(meth)acrylamide and 1-acryloyloxy-3-methacryloyloxy-2-hydroxy-propane to be used in the composition comprising - N-2,3-dihydroxypropyl (meth)acrylamide and 1-acryloyloxy-3- methacryloyloxy-2-hydroxy-propane as a composition comprising the above-mentioned compound represented by the general formula (1) and the above-mentioned compound having at least one hydroxyl group and two or more (meth) acryloyloxy groups in the molecule is in the range of 2 to 4: 6 to 8 by weight, a polymer layer having a water contact angle of 45 degrees or less, preferably a water contact angle of 20 to 45 degrees, particularly preferably a water contact angle of 30 to 40 degrees can be provided on the base material film.

When the composition containing the compound represented by the general formula (1) and the compound having at least one hydroxyl group and two or more (meth)acryloyloxy groups in the molecule are copolymerized, a solvent can be used for the purpose of adjusting the viscosity or the like. As the solvent, for example, a polar solvent including water, a lower alcohol such as methanol, a mixture of water and a lower alcohol and the like are exemplified. The amount of the solvent to be used is not particularly limited and can be appropriately determined in view of economic efficiency or the like.

The thickness of the laminated film of the present invention can be appropriately determined depending on the application, however, the thickness of the base material film is generally in the range of 12 to 100 μm, preferably in the range of 25 to 80 μm, and the thickness of the polymer layer having a water contact angle of 45 degrees or less is in the range of 0.1 to 20 μm, preferably in the range of 1 to 10 μm.

With regard to the laminated film of the present invention, an adhesive layer may be laminated on the other side of the surface (the surface where the above-mentioned copolymer is not laminated) of the base material film. In the case where an adhesive layer is laminated on the other side of the surface of the base material film, the laminated film can be easily attached to a guide plate such as an advertising display, an advertisement or a guide plate, a sign board for a railway, a road or the like, an exterior wall for a building, a window glass or the like as an antifouling film. The thickness of the adhesive layer is generally in the range of 2 to 50 μm, preferably in the range of 5 to 30 μm.

With regard to the laminated film of the present invention, a release film may be laminated on the surface of the adhesive layer. By laminating a release film on the surface of the adhesive layer, the surface of the adhesive layer of the laminated film can be prevented from being fouled when the laminated film is transported, stored, displayed or the like. The thickness of the release film is generally in the range of 5 to 100 μm, preferably in the range of 10 to 60 μm.

With regard to the laminated film of the present invention, in the case where a cover film to be used in a production method described later is left laminated after the laminated film has been produced as a protective layer for the polymer layer having a water contact angle of 45 degrees or less obtained by copolymerizing the composition of the above-mentioned compound represented by the general formula (1) and the above-mentioned compound having

at least one hydroxyl group and two or more (meth) acryloyloxy groups in the molecule, the polymer layer having a water contact angle of 45 degrees or less can be prevented from being scratched or fouled when the laminated film is transported, stored, displayed or the like. The thickness of the cover film is generally in the range of 5 to 100 μm, preferably in the range of 10 to 40 μm.

The laminated film of the present invention can be produced by coating the composition containing the above-mentioned compound represented by the general formula (1) and the above-mentioned compound having at least one hydroxyl group and two or more (meth) acryloyloxy groups in the molecule, drying the composition as needed, and irradiating the coating layer comprising the composition with the above-mentioned radiation thereby to copolymerize the composition which forms the coating layer.

When the coating layer comprising the above-mentioned composition is irradiated with radiation, it is preferred that after the coating layer is covered with a cover film having a water contact angle of the surface to be in contact with the coating layer of 55 degrees or less, preferably 50 degrees or less, and then the coating layer is irradiated with radiation. When the coating layer is covered with a cover film, it is preferred that the coating layer and the cover film are made to stick to each other so as to avoid trapping air (oxygen) between them, in other words, air is blocked so as to avoid contacting the composition with air. By blocking oxygen, the amount of a photopolymerization initiator necessary for copolymerizing the compound represented by the general formula (1) and the compound having at least one hydroxyl group and two or more (meth)acryloyloxy groups in the molecule in the layer of the coated composition can be made small, and moreover, a uniform polymer layer can be obtained, and the stickiness of the polymer layer caused by unreacted monomers or the like can be suppressed, therefore, it is preferred. In addition, by making the coating layer and the cover film stick to each other, a polymer layer having a more uniform water contact angle can be obtained.

In the case where the coating layer comprising the above-mentioned composition is covered with a cover film and irradiated with radiation, it is necessary to use a cover film having a water contact angle of 55 degrees or less, preferably 50 degrees or less. In the case where a film having a water contact angle of more than 55 degrees is used as a cover film, the water contact angle of the polymer layer obtained by copolymerizing the compound represented by the general formula (1) and the compound having at least one hydroxyl group and two or more (meth)acryloyloxy groups in the molecule in the layer of the coated composition exceeds 45 degrees, whereby a film has an inferior antifouling property.

A method of coating the above-mentioned composition on one surface of a base material film is not particularly limited, however, for example, the composition containing the compound represented by the general formula (1) and the compound having at least one hydroxyl group and two or more (meth)acryloyloxy groups in the molecule may be coated so as to be a thickness of 0.1 to 20 μm, preferably 1 to 10 μm using various known coating machines such as gravure coaters including an air knife coater, a direct gravure coater, an offset gravure, an arc gravure coater, a reverse gravure, a jet nozzle type and the like; reverse roll coaters including a top-feed reverse coater, a bottom-feed reverse coater, a nozzle-feed reverse coater and the like; a five-roll coater, a lip coater, a bar coater, a bar reverse coater, a die coater, etc. In the case where the composition diluted with a solvent is used, a method of coating the composition, and drying the composition at a temperature of 60 to 130°C for 10 seconds to 2 minutes so as to attain a thickness of 0.1 to 20 μm, preferably 1 to 10 μm in a dried state can be exemplified.

In the case where a cover film is used in the production of the laminated film, there is no restriction on the cover film as long as it is a film having a water contact angle of the surface to be in contact with the composition of 55 degrees or less. As such a cover film, for example, a film of a polymer having a water contact angle of 55 degrees or less, to be more specific, a vinyl alcohol-based polymer such as polyvinyl alcohol, an ethylene-vinyl alcohol copolymer; polyacrylamide, polyisopropylacrylamide, polyacrylonitrile, a polymer obtained by copolymerizing the composition containing the above-mentioned compound represented by the general formula (1) and the compound having at least one hydroxyl group and two or more (meth)acryloyloxy groups in the molecule or the like is exemplified.

Incidentally, the cover film may be a monolayer cover film obtained from the above-mentioned vinyl alcohol-based polymer or a laminated cover film of the above-mentioned vinyl alcohol-based polymer and another film. In the case where a monolayer film obtained from a vinyl alcohol-based polymer or the like is used as a cover film, a uniaxially oriented film or a biaxially oriented film is preferred because both have a rigidity and are excellent in secondary processing, for example, when the cover film is overlapped on the surface of the coating layer comprising the composition, air is unlikely to be trapped.

As the laminated cover film, for example, a laminated film of a biaxially oriented polypropylene film, a biaxially oriented polyester film and the above-mentioned vinyl alcohol-based polymer or a polymer having a water contact angle of 55 degrees or less obtained by polymerizing the composition containing the compound represented by the general formula (1) and the compound having at least one hydroxyl group and two or more (meth)acryloyloxy groups in the molecule is exemplified.

Hereunder, the present invention will be described in more detail with reference to Examples, however, the present invention is not limited only to these Examples.

A polymerization reaction of a composition and analysis of a product were carried out at room temperature unless otherwise specified.

The water contact angle of each of the coating films and the like obtained in Examples 1 to 60 and Comparative Examples 1 to 3 was measured at room temperature (25°C) using CA-V manufactured by Kyowa Interface Science Co., Ltd. The mean value of the measurement results of five arbitrary points for water droplets on a target material for measurement was shown.

In addition, the adhesive property of each of the coating films and the like obtained in Examples 1 to 60 and Comparative Examples 1 to 3 was evaluated by the following two test methods. [Loop tack test: see Fig. 1] (FINAT Test Method No. 9: FINAT Technical Handbook 6th edition, 2001)

A film (width: 25 mm) in which a coating film is formed on one surface is hung down in such a manner that the coated side thereof is in contact with the surface of SUS304 plate (mirror finish) and maintained for 30 seconds. After the layer of the adhesive is brought into contact with SUS304 plate by the weight of the film itself, the film is pulled at a rate of 30 mm/min, and the stress is measured at the time when the film is pulled.

[180° peel adhesion measurement test: see Fig. 2] (JIS Z0234)

After a polypropylene sheet is stuck to the coated side of a film (width: 25 mm) in which a coating film is formed on one surface, the film is rolled twice with a roller at an applied load of 2 kgf and a rate of about 20 mm/sec, then, the film is let stand for 5 minutes. Then, the film is pulled at a rate of 30 mm/min in a direction (180°) along where back face on which the adhesive layer is not coated contacts to each other, and the stress is measured at the time when the film is pulled.

[Example 1]

To a mixed solution of 15.0 g of 2,3-dihydroxypropyl methacrylamide, 3.5 g of 1,3-dimethacryloyloxy-2-hydroxy-propane and 1.5 g of pentaerythritol triacrylate, 1.0 g (5 wt%) of 1-hydroxycyclohexyl phenyl ketone, 1.0 g (5 wt%) of benzophenone, 1.0 g (5 wt%) of acryloyl morpholine and 5.0 g (25 wt%) of methanol were added and mixed, whereby a composition was prepared.

To the surface of each of a biaxially oriented polypropylene film with a thickness of 20 μm which was subjected to a corona treatment (water contact angle of 85 degrees), a polymethyl methacrylate sheet with a thickness of 1 mm which was not subjected to a corona treatment (hereinafter abbreviated as an "untreated PMMA sheet", water contact angle of 67 degrees), and a polycarbonate sheet with a thickness of 1 mm which was not subjected to a corona treatment (hereinafter abbreviated as an "untreated PC sheet", water contact angle of 62 degrees), a polyester polyurethane-based adhesive was applied using a bar coater, and dried by heating. Subsequently, to the formed primer surface, the above-mentioned composition was applied in the same manner using a bar coater and dried by heating. Then, using a high-pressure mercury vapor lamp, the composition was irradiated with ultraviolet light with an intensity of 240 mW/$cm^2$ for 11 seconds, whereby a coating film comprising a copolymer was formed.

The coating film formed on each of the film and sheets was uniform and transparent, did not have an adhesive property when it was touched by hand, had a water contact angle of 12 degrees, and rigidly adhered to each of the film and sheets.

In addition, the surface resistance of the coated surface was $2.5 \times 10^{11}$ Ω (at 23°C and a humidity of 55% RH).

Further, the polypropylene film on which the coating film comprising the copolymer was formed was cut into strips with a width of 25 mm, and the loop tack test and the 180° peel adhesion measurement test were carried out. As a result, both measurement values were 0 kgf/25 mm.

[Example 2]

To a mixed solution of 15:0 g of 2,3-dihydroxypropyl methacrylamide, 5.0 g of dimethacryloyloxyethyl phosphate, 1.0 g (5 wt%) of 1-hydroxycyclohexyl phenyl ketone, 1.0 g (5 wt%) of benzophenone, 1.0 g (5 wt%) of N, N-dimethylaminoethyl methacrylate and 8.0 g of methanol were added and mixed, whereby a composition was prepared.

This composition was applied to the surface of the three sheets in the same manner as in Example 1, then using a high-pressure mercury vapor lamp, the composition was irradiated with ultraviolet light with an accumulated amount of dose of 1500 to 2000 mJ/$cm^2$, whereby a coating film comprising a copolymer was formed.

The coating film formed on each of the film and sheets was uniform and transparent as same as in Example 1, did not have an adhesive property when it was touched by hand, had a water contact angle of 10 degrees, and rigidly adhered to each of the film and sheets.

In addition, the surface resistance of the coated surface was $8.2 \times 10^{10}$ Ω (at 23°C and a humidity of 55% RH) .

In the same manner as in Example 1, by using the polypropylene film on which the coating film comprising

the copolymer was formed, the loop tack test and the 180° peel adhesion measurement test were carried out. As a result, both measurement values were 0 kgf/25 mm.

(Self-cleaning test for the coating films of Example 1 and Example 2 with Contaminant 1)

As a pseudo-substance of an airborne hydrophobic substance, a mixture (hereinafter abbreviated as "Contaminant 1") comprising 80.0 g of a motor oil (Nippon Oil Co., API SL 10W-30) and 10.0 g of powder activated carbon (Wako Pure Chemical Industries, Ltd., reagent of the highest quality) was prepared. This Contaminant 1 was dropped on the surface of the coating film of each sheet comprising the copolymer in an amount of about 2 ml. Right after the Contaminant 1 was spread on the surface of the sheet, shower water (spraying pressure: 1.2 Kgf/cm$^2$) was sprayed thereon at 160 ml/sec for 10 seconds, and the state of fouling was determined visually. The case where adhesion of the Contaminant 1 to the surface of a test sheet almost disappeared was defined as "good", the case where the contaminant apparently adhered and remained was defined as "poor". The results are shown in Table 1.

(Self-cleaning test for the coating films of Example 1 and Example 2 with Contaminant 2)

As a pseudo-substance of an airborne hydrophobic substance, a mixture (hereinafter abbreviated as "Contaminant 2") comprising 80.0 g of liquid paraffin (Junsei Chemical Co., Ltd., reagent of the highest quality) and 11.2 g of powder activated carbon (Wako Pure Chemical Industries, Ltd. , reagent of the highest quality) was prepared, and the same test was carried out. The case where adhesion of the Contaminant 2 to the surface of the coating film comprising the copolymer of each sheet almost disappeared was defined as "good", the case where the contaminant apparently remained was defined as "poor". The results are shown in Table 1.

(Fogging test for the coating films of Example 1 and Example 2)

A breath was directly blown to the surface of the coating film comprising the copolymer of each of the following sheets at an extremely close range, and the case where the surface of the sheet was not fogged was defined as "good" and the case where it was fogged was defined as "poor". The results are shown in Table 1.

Table 1

| | Water contact angle | Self-cleaning test | | Fogging test |
|---|---|---|---|---|
| | | Contaminant 1 | Contaminant 2 | |
| Sheet of Example 1 | 12° | good | good | good |
| Sheet of Example 2 | 10° | good | good | good |
| Untreated PMMA sheet | 67° | poor | poor | poor |
| Untreated PC sheet | 62° | poor | poor | poor |

[Comparative Example 1]

To 2 0 . 0 g of 2-acetamido- ethyl-acrylate, 1.0 g (5.0 wt%) of 2-hydroxy-2,2-dimethyl-1-phenyl-ethane-1-one was added as a self-cleavage type photo-radical polymerization initiator and mixed, whereby a composition was prepared.

By using this composition, a coating film comprising a copolymer was formed in the same manner as in Example 1. The coating film formed on each of the film and sheets was uniform and transparent and the water contact angle of the surface was 18 degrees, however, it had apparently an adhesive property when it was touched by hand. In addition, in the same manner as in Example 1, by using the polypropylene film on which the coating film was formed, the loop tack test and the 180° peel adhesion measurement test were carried out. As a result, the measurement values were 40 gf/25 mm (peak value) and 80 gf/25 mm (peak value), respectively. The results are shown in Table 2.

[Example 3]

To a mixed solution of 16.0 g of 2-hydroxypropyl methacrylamide and 4.0 g of 1,3-dimethacryloyloxy-2-hydroxy-propane, 0.06 g (0.3 wt%) of Darocur 1173 (manufactured by Ciba Speciality Chemicals Inc.) as a photopolymerization initiator, 0.06 g (0.3 wt%) of t-butylperoxy-3,5,5-trimethylhexanoate as a heat polymerization initiator and 0.06 g (0.3 wt%) of bis(5-n-butoxy-1,4-dimethyl-3-oxapentyl) phosphate as an internal mold release agent were added and

mixed and defoamed under reduced pressure, whereby a composition was prepared.

This composition was transferred to a glass mold composed of an adhesive tape made of a resin and a glass plate, cured by irradiation with ultraviolet light with an intensity of 150 mW/cm$^2$, then subjected to an aging treatment at 100°C for 2 hours. After cooling, the obtained copolymer, which was demolded from the glass mold, was a uniform and transparent molded product. The surface of the resin did not have an adhesive property when it was touched by hand, and the water contact angle was 24 degrees. The results are shown in Table 2.

[Examples 4 to 25, Examples 27 to 60 and Comparative Examples 2 to 3]

In the same manner as in Example 3, a molded product comprising a copolymer prepared by using a monomer shown in Table 2 was produced. The results are shown in Table 2.

[Example 26]

First, an isocyanate-based primer was applied to a glass plate, and dried by heating at 120°C for 30 minutes. Then, a composition obtained by mixing 6.7 g of 2,3-dihydroxypropyl methacrylamide, 6.8 g of Cyclomer-P/ stock number ACA-200M (solid content: 48.3 wt%, manufactured by Daicel Chemical Industries, Ltd.), 0.5 g (5.0 wt%) of Esacure KTO/46 (manufactured by Lamberti Co.) as a photopolymerization initiator, 0.5 g (5.0 wt%) of N,N-dimethylaminoethyl methacrylate as a polymerization accelerator and 10.0 g of methanol as a diluting solvent was applied to a glass subjected to a primer treatment (primer surface) and dried by heating again at 120°C for 30 minutes.

Finally, a glass plate which was cooled and taken out was irradiated with ultraviolet light, whereby a coating film comprising a copolymer was formed.

The coating film formed on the glass plate was uniform and transparent in the same manner as in Example 1, did not have an adhesive property when it was touched by hand and had a water contact angle of 26 to 47 degrees.

Hereunder, the outline of Examples 1 to 60 and Comparative Examples 1 to 3 is summarized in Table 2. In the following table, Compound I indicates a compound represented by the general formula (1), Compound II-1 indicates a compound having at least two (meth) acryloyl groups in the molecule, and Compound II-2 indicates a compound represented by the general formula (19).

In addition, in the following table, the abbreviations of the compounds are as follows.

Compound I

DHPM: 2,3-dihydroxypropyl methacrylamide
HPM: 3-hydroxypropyl methacrylamide
HEMAM: 2-hydroxyethyl methacrylamide
BHM: bis(2-hydroxyethyl) methacrylamide
BHAM: bis(2-hydroxyethyl) acrylamide
HMA: N-methylol acrylamide

Compound II-1

GDM: 2-hydroxypropyl-1,3-dimethacrylate
PE-3A: pentaerythritol triacrylate
G-201P: 1-acryloyloxy-2-hydroxy-3-methacryloyloxy-propane
P-2M: bis(methacryloyloxyethyl) phosphate
EGMA: ethyleneglycol dimethacrylate
NP-A: neopentylglycol diacrylate
HPP-A: neopentylglycol hydroxypivalate diacrylate
DCP-A: dimethylol tricyclodecane diacrylate
3002M: bis[4-(6-methacryloyloxy-5-hydroxy-2-methyl-3-oxahexyloxy]phenyl]-1,1-propane
40EM: 1,10-dimethacryloyloxy-2,9-dihydroxy-4,7-dioxadecane
UA-3061: pentaerythritol triacrylate isophorone diisocyanate urethane prepolymer
PE-4A: pentaerythritol tetraacrylate
BP-4EA: bis[4-(5-acryloyloxy-3-oxapentyloxy)phenyl]-1,1-propane

TMP-M: trimethylolpropane trimethacrylate
DPE-6A: dipentaerythritol hexaacrylate
TMP-A: trimethylolpropane triacrylate
Compound II-2
HEMA: 2-hydroxyethyl methacrylate
HEA: 2-hydroxyethyl acrylate
2-HPM: 2-hydroxypropyl methacrylate
2-HBM: 2-hydroxybutyl methacrylate
HOMS: methacryloyloxy ethyl succinate
THFM: tetrahydro furfuryl methacrylate
MMA: methyl methacrylate
HOA-HH: acryloyloxyethyl hexahydrophthalate P-1M: methacryloyloxyethyl phosphate

Others

AEA: 2-acetamidoethyl acrylate

Table 2-1

| | Compound I | Compound II-1 | Compound II-2 | Transparency value of copolymer | Adhesion property of copolymer | Transparency of copolymer | Water contact angle |
|---|---|---|---|---|---|---|---|
| Example 1 | 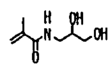 DHPM 15 pt. | 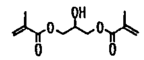 GDM 3.5 pt. 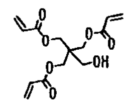 PE3A 1.5 pt. | | 1.139 | Absence | Transparent | 12° |
| Example 2 | 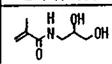 DHPM 15 pt. | 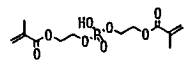 P-2M 5 pt. | | 0.769 | Absence | Transparent | 10° |
| Example 3 | 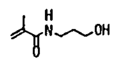 HPM 16 pt. | 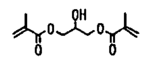 GDM 4 pt. | | 0.369 | Absence | Transparent | 24° |
| Example 4 | 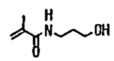 HPM 16 pt. | 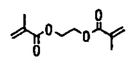 EGMA 4 pt. | | 1.287 | Absence | Transparent | 24° |
| Example 5 | 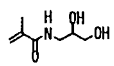 DHPM 8.0 pt. 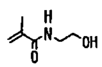 HEMAM 6.0 pt. | 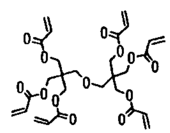 DPE-6A 6.0 pt. | | 0.957 | Absence | Transparent | 23° |
| Comp.Ex.1 | 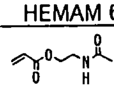 AEA 20 pt. | | | | Presence | Transparent | 18° |
| Comp.Ex.2 | | 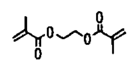 EGMA 4 pt. | 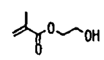 HEMA 16 pt. | | Absence | Transparent | 46° |
| Comp.Ex.3 | | 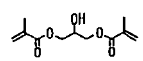 GDM 4 pt. | 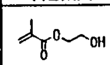 HEMA 16 pt. | | Absence | Transparent | 37° |

Table 2-2

| | Compound I | Compound II-1 | Compound II-2 | Transparency value of copolymer | Adhesion property of copolymer | Transparency of copolymer | Water contact angle |
|---|---|---|---|---|---|---|---|
| Example 6 | 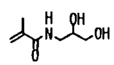 DHPM 12 pt. | 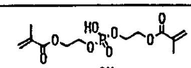 P-2M 2 pt. 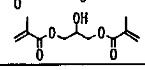 GDM 6 pt. | | 0.800 | Absence | Transparent | 16° |
| Example 7 | 〃 | 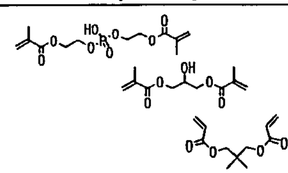 P-2M 4 pt. GDM 3.2 pt. NP-A 0.8 pt. | | 0.621 | Absence | Transparent | 20° |
| Example 8 | 〃 | 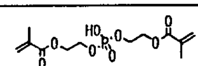 P--2M 3.3 pt. 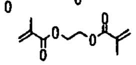 EGMA 3.3 pt. | | -0.149 | Absence | white and opaque | 9° |

Table 2-3

| | Compound I | Compound II-1 | Compound II-2 | Transparency value of copolymer | Adhesion property of copolymer | Transparency of copolymer | Water contact angle |
|---|---|---|---|---|---|---|---|
| Example 9 | 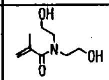 BHM 8.0 pt. | 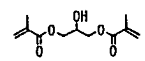 GDM 2.0 pt. | | 1.034 | Absence | Transparent | 10° |
| Example 10 | 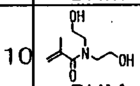 BHM 6.5 pt. | 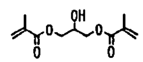 GDM 3.5 pt. | | 0.850 | Absence | Transparent | 20° |
| Example 11 | 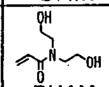 BHAM 5.0 pt. | 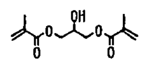 GDM 5.0 pt. | | 0.729 | Absence | Transparent | 22° |
| Example 12 | 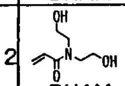 BHAM 4.0 pt. | 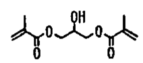 GDM 6.0 pt. | | 0.606 | Absence | Transparent | 29° |
| Example 13 | 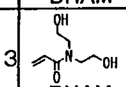 BHAM 7.5 pt. | 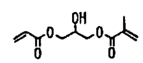 G-201P 2.5 pt. | | 1.095 | Absence | Transparent | 23° |
| Example 14 | 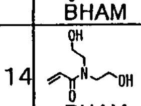 BHAM 5.5 pt. | 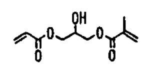 G-201P 4.5 pt. | | 0.850 | Absence | Transparent | 34° |
| Example 15 | 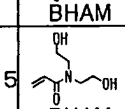 BHAM 4.0 pt. | 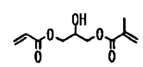 G-201P 6.0 pt. | | 0.666 | Absence | Transparent | 36° |
| Example 16 | 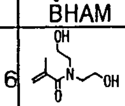 BHM 8.0 pt. | 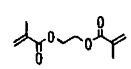 EGMA 2.0 pt. | | -0.072 | Absence | white and opaque | 10° |
| Example 17 | 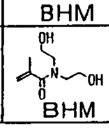 BHM 5.0 pt. | 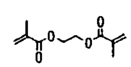 EGMA 5.0 pt. | | -0.440 | Absence | white and opaque | 10° |

Table 2-4

| | Compound I | Compound II-1 | Compound II-2 | Transparency value of copolymer | Adhesion property of copolymer | Transparency of copolymer | Water contact angle |
|---|---|---|---|---|---|---|---|
| Example 18 | 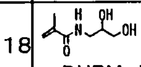 DHPM 5.0 pt. | 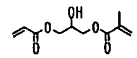 G-201P 5.0 pt. | | 0.809 | Absence | Transparent | 18° |
| Example 19 | 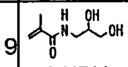 DHPM 4.0 pt. | 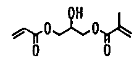 G-201P 6.0 pt. | | 0.686 | Absence | Transparent | 21° |
| Example 20 | 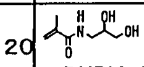 DHPM 8.0 pt. | 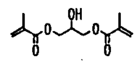 GDM 2.0 pt. | | 1.118 | Absence | Transparent | 10° |
| Example 21 | 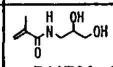 DHPM 6.0 pt. | 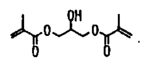 GDM 4.0 pt. | | 0.873 | Absence | Transparent | 10° |
| Example 22 | 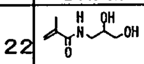 DHPM 5.0 pt. | 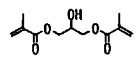 GDM 5.0 pt. | | 0.750 | Absence | Transparent | 10° |
| Example 23 | 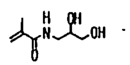 DHPM 12 pt. | 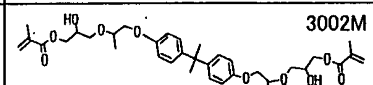 3002M 3 pt. 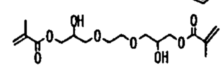 40EM 5 pt. | | 1.151 | Absence | Transparent | 35° |
| Example 24 | 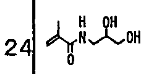 DHPM 4.0 pt. | 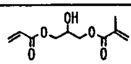 G-201P 5.0 pt. 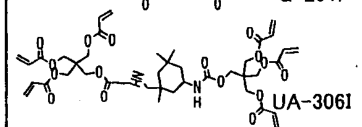 UA-306I 1.0 pt. | | 0.399 | Absence | Transparent | 37° |
| Example 25 | 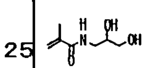 DHPM 5.0 pt. | 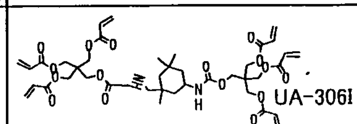 UA-306I 5.0 pt. | | -0.913 | Absence | white and opaque | 8° |
| Example 26 | 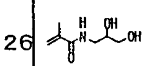 DHPM 6.7 pt. | 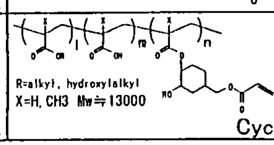 R=alkyl, hydroxylalkyl X=H, CH3 Mw≒13000 Cyclomer-P 3.3 pt. | | 1.828 | Absence | Transparent | 26-47° |

Table 2-5

| | Compound I | Compound II-1 | Compound II-2 | Transparency value of copolymer | Adhesion property of copolymer | Transparency of copolymer | Water contact angle |
|---|---|---|---|---|---|---|---|
| Example 27 | 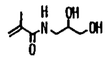 DHPM 6.0 pt. | 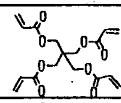 PE-4A 2.0 pt. | 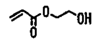 HEA 2.0 pt. | 1.209 | Absence | Transparent | 11° |
| Example 28 | 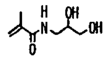 DHPM 5.0 pt. | 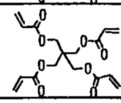 PE-4A 2.5 pt. | 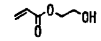 HEA 2.5 pt. | 1.101 | Absence | Transparent | 12° |
| Example 29 | 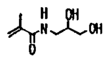 DHPM 4.0 pt. | 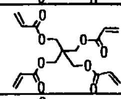 PE-4A 3.0 pt. | 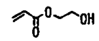 HEA 3.0 pt. | 0.994 | Absence | Transparent | 19° |
| Example 30 | 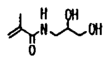 DHPM 6.0 pt. | 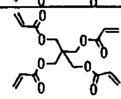 PE-4A 2.0 pt. | 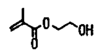 HEMA 2.0 pt. | 1.356 | Absence | Transparent | 21° |
| Example 31 | 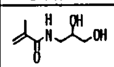 DHPM 4.0 pt. | 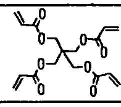 PE-4A 3.0 pt. | 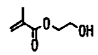 HEMA 3.0 pt. | 1.141 | Absence | Transparent | 22° |
| Example 32 | 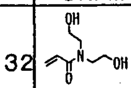 BHAM 6.0 pt. | 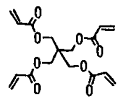 PE-4A 2.0 pt. | 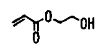 HEA 2.0 pt. | 0.981 | Absence | Transparent | 22° |
| Example 33 | 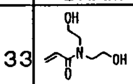 BHAM 5.0 pt. | 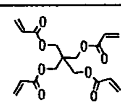 PE-4A 2.5 pt. | 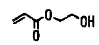 HEA 2.5 pt. | 0.874 | Absence | Transparent | 23° |
| Example 34 | 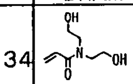 BHAM 4.0 pt. | 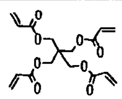 PE-4A 3.0 pt. | 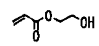 HEA 3.0 pt. | 0.766 | Absence | Transparent | 38° |
| Example 35 | 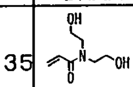 BHAM 5.0 pt. | 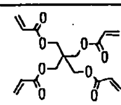 PE-4A 2.5 pt. | 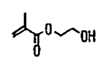 HEMA 2.5 pt. | 1.228 | Absence | Transparent | 33° |
| Example 36 | 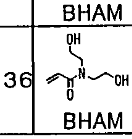 BHAM 4.0 pt. | 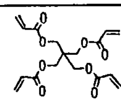 PE-4A 3.0 pt. | 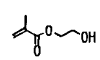 HEMA 3.0 pt. | 1.120 | Absence | Transparent | 36° |

Table 2-6

| | Compound I | Compound II-1 | Compound II-2 | Transparency value of copolymer | Adhesion property of copolymer | Transparency of copolymer | Water contact angle |
|---|---|---|---|---|---|---|---|
| Example 37 | 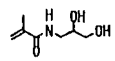 DHPM 4.0 pt. | 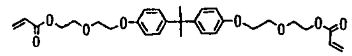 BP-4EA 2.0 pt. | 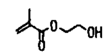 HEMA 4.0 pt. | 0.217 | Absence | Transparent | 27° |
| Example 38 | 〃 | 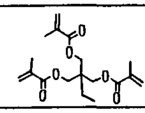 TMP-M 3.0 pt. | 〃 | 0.728 | Absence | Transparent | 27° |
| Example 39 | 〃 | 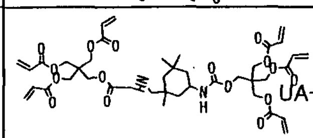 UA-306I 3.0 pt. | 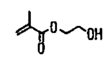 HEMA 3.0 pt. | 0.595 | Absence | Transparent | 26° |
| Example 40 | 〃 | 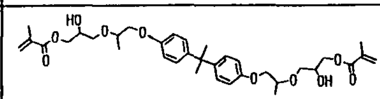 3002M 3.0 pt. | 〃 | 1.930 | Absence | Transparent | 42° |
| Example 41 | 〃 | 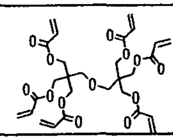 DPE-6A 3.0 pt. | 〃 | 1.142 | Absence | Transparent | 21° |
| Example 42 | 〃 | 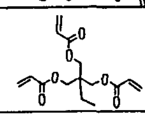 TMP-A 3.0 pt. | 〃 | 0.953 | Absence | Transparent | 33° |
| Example 43 | 〃 | 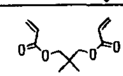 NPA 3.0 pt. | 〃 | 1.179 | Absence | Transparent | 22° |
| Example 44 | 〃 | 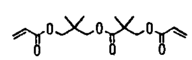 HPP-A 3.0 pt. | 〃 | 0.974 | Absence | Transparent | 34° |
| Example 45 | 〃 | 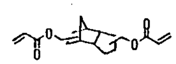 DCP-A 3.0 pt. | 〃 | 0.558 | Absence | Transparent | 25° |

Table 2-7

| | Compound I | Compound II-1 | Compound II-2 | Transparency value of copolymer | Adhesion property of copolymer | Transparency of copolymer | Water contact angle |
|---|---|---|---|---|---|---|---|
| Example 46 | 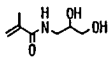 DHPM 5.0 pt. | 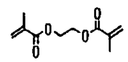 EGMA 2.0 pt. | 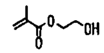 HEMA 3.0 pt. | 1.275 | Absence | Transparent | 13° |
| Example 47 | 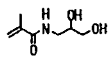 DHPM 5.0 pt. | 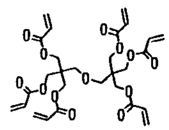 DPE-6A 2.5 pt. | 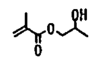 2-HPM 2.5 pt. | 1.316 | Absence | Transparent | 30° |
| Example 48 | 〃 | 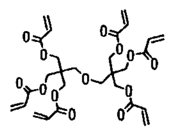 DPE-6A 2.5 pt. | 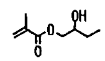 2-HBM 2.5 pt. | 0.870 | Absence | Transparent | 34° |
| Example 49 | 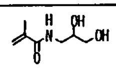 DHPM 3.3 pt. | 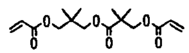 HPP-A 3.3 pt. | 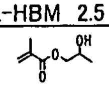 2-HPM 3.3 pt. | 0.970 | Absence | Transparent | 45° |
| Example 50 | 〃 | 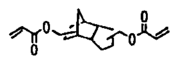 DCP-A 3.3 pt. | 〃 | 0.554 | Absence | Transparent | 42° |
| Example 51 | 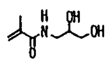 DHPM 4.0 pt. | 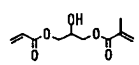 G-201P 3.0 pt. | 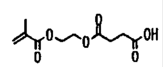 HOMS 3.0 pt. | 1.513 | Absence | Transparent | 21° |
| Example 52 | 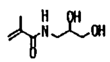 DHPM 3.3 pt. | 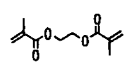 EGMA 3.3 pt. | 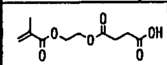 HOMS 3.3 pt. | 0.277 | Absence | Transparent | 31° |
| Example 53 | 〃 | 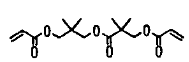 HPP-A 3.3 pt. | 〃 | 0.099 | Absence | white and opaque | 18° |

Table 2-8

| | Compound I | Compound II-1 | Compound II-2 | Transparency value of copolymer | Adhesion property of copolymer | Transparency of copolymer | Water contact angle |
|---|---|---|---|---|---|---|---|
| Example 54 | 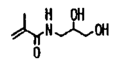 DHPM 5.0 pt. | 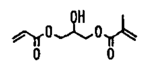 G-201P 2.5 pt. | 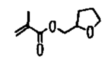 THFM 2.5 pt. | 0.657 | Absence | Transparent | 40° |
| Example 55 | 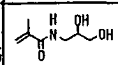 DHPM 5.0 pt. | 〃 | 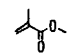 MMA 2.5 pt. | 0.578 | Absence | Transparent | 40° |
| Example 56 | 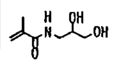 DHPM 4.0 pt. | 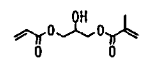 G-201P 3.0 pt. | 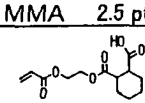 HOA-HH 3.0 pt. | 1.543 | Absence | Transparent | 34° |
| Example 57 | 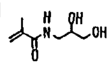 DHPM 3.3 pt. | 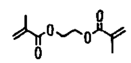 EGMA 3.3 pt. | 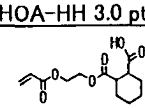 HOA-HH 3.3 pt. | 0.307 | Absence | Transparent | 40° |
| Example 58 | 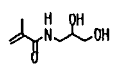 DHPM 4.0 pt. | 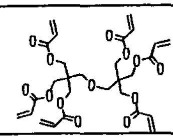 DPE-6A 3.0 pt. | 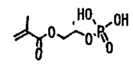 P-1M 3.0 pt. | 0.807 | Absence | Transparent | 6° |
| Example 59 | 〃 | 〃 | 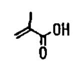 methacrylic acid 3.0 pt. | 0.506 | Absence | Transparent | 37° |
| Example 60 | 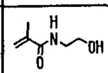 HEMAM 3.1 pt. 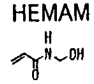 HMA 0.8 pt. | 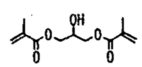 GDM 6.1 pt. | | 0.572 | Absence | Transparent | 23° |

The measurement of the water contact angle and the fouling test of each of the laminated films obtained in Examples 61 to 70 and Comparative Examples 4 to 11 described later were carried out by the following methods.

(1) Water contact angle

Purified water (manufactured by Seiki Yakuhin Kogyo) was dropped on the surface of the polymer layer of a laminated film to form a 0.02-ml water droplet, and after 30 seconds, the contact angle was measured using a contact angle measuring appratus (manufactured by Kyowa Interface Science Co., Ltd., FACE CA-W).

Incidentally, the water contact angle of the cover film itself was measured in the same manner.

(2) Fouling test

<Preparation of contaminant>

An engine oil (50 g) (manufactured by Yamaha Motor Co., trade name: 2-Cycle Oil Autolube Super Oil) and 0.5 g of carbon black (manufactured by Mitsubishi Chemical Co., carbon black No. 40) were mixed and stirred, whereby a contaminant was prepared.

<Setting of test film>

A test film in a size of 15 cm x 15 cm was cut out from a laminated film, and attached to a steel plate tilted at an angle of 60 degrees.

<Application of contaminant>

By using a 2-cc polyethylene pipet, seven droplets of the contaminant were dropped one by one on the upper end of the test film while moving in the widthwise direction. Then, the test film was left until the contaminant reached around the lower end of the test film.

<Washing of contaminant>

With regard to the test film, on which the contaminant was dropped, by using a spray bottle (manufactured by Canyon Inc., Model T-7500) containing tap water at 23°C, water was sprayed ten times at the upper end of the fouling evenly in the widthwise direction at a distance of 15 cm from the test film. Then, the film was left for 2 minutes. This procedure was repeated 5 times, and the state of attachment of the contaminant was evaluated by the following scores.

5: Attachment of the contaminant is not observed.
4: Attachment of the contaminant is slightly observed.
3: Attachment of the contaminant is partially observed.
2: Attachment of the contaminant is observed in half of the test film.
1: Attachment of the contaminant is observed on the entire surface.

<Repeated test>

Application and washing of the contaminant were repeated three times for the same sample, and the state of attachment of the contaminant was evaluated for the first-time operation and the third-time operation. Incidentally, between the repeated operations, the water droplets attached by the washing were removed and the surface of the laminated film was dried with a dryer.

[Examples 61 to 66]

To the corona-treated surface of a base material film comprising a biaxially oriented polyethylene terephthalate film (manufactured by Unitika Ltd., Emblet SA) with a thickness of 100 µm which was subjected to a corona treatment on one surface, an anchor agent (manufactured by Mitsui Takeda Chemicals Inc., a solution in which Takerack A-310 and Takenate D110N (trade name) were mixed at a ratio of 3:2 and diluted with ethyl acetate) was applied and dried, whereby a film of 0.2 g/m$^2$ was laminated. Then, as a composition for forming a coating film, a solution obtained by blending compounds as shown in Table 3 was coated thereto at 3.6 g/m$^2$ with a Mayer bar. Subsequently, the coated surface was covered with a cover film described below and shown in Table 3 so as to avoid trapping air, and the film was fixed on a stainless plate so as to make the side of the cover film up. Then, the surface of the cover film was irradiated with UV using a UV irradiator (manufactured by Eyegraphics Co. Ltd., EYE GRANDAGE type ECS 301G1)

under the condition that the UV intensity was 240 mW/cm$^2$ and the accumulated amount of dose was 340 mJ/cm$^2$, whereby the composition layer was copolymerized. Then, a one-day aging treatment was carried out in an oven at 40°C, and the cover film was removed, whereby a laminated film was obtained.

The evaluation results of the obtained laminated films are shown in Table 3.

Incidentally, the detail of the compounds such as monomers described in Table 3 and Table 4 are as follows.

Compound 1: N-(2,3-dihydroxypropyl) methacrylamide
Compound 2: 1-acryloyloxy-3-methacryloyloxy-2-hydroxy-propane
Compound 3: N-methylolacrylamide
Initiator: manufactured by Lamberti Co., trade name: Esacure KT046 (mixture of oligo[2-hydroxy-2-methyl-1-[4-(1-methylvinyl)phenyl]propane, mixture of 2,4,6-trimethylbenzophenone and 4-methylbenzophenone, and 2,4,6-trimethylbenzoyldiphenyl-phosphineoxide)
Accelerator: N,N-dimethylaminoethyl methacrylate

In addition, the detail of the cover films A, B, E and F described in Table 3 and Table 4, and the surface which was in contact with the composition layer for forming the coating film are as follows.

A: a biaxially oriented polypropylene film laminated with polyvinyl alcohol (manufactured by Tohcello Co. Ltd., trade name: A-OPBH, thickness: 20 μm, the thickness of polyvinyl alcohol layer: 1.3 μm), the surface applied with polyvinyl alcohol
B: a biaxially oriented polyvinyl alcohol film (Nippon Synthetic Chemical Industry Co. Ltd., trade name: Boblon 14 μm)
E: the antifouling film prepared in Example 61, the surface of copolymer layer
F: the antifouling film prepared in Example 64, the surface of copolymer layer

[Comparative Examples 4 to 7]

An antifouling film was prepared by the same method as in Example 61 using a cover film described below instead of the cover film used in Example 61. The evaluation results are shown in Table 3.

In addition, the detail of the cover films C and D described in Table 3 and Table 4 and the surface which was in contact with the composition layer for forming the coating film are as follows.

C: a biaxially oriented polyethylene terephthalate film (manufactured by Unitika Ltd. , trade name: Emblet PET, 12 μm), the surface which was not subjected to a corona treatment
D: a biaxially oriented polypropylene film (manufactured by Tohcello Co. Ltd., trade name: OP M-1, 20 μm), the surface which was not subjected to a corona treatment

[Reference Example 1]

The hydrophilic surface of a commercially available antifouling film containing titanium oxide in the antifouling layer (trade name: Hydrotecto Window Film, manufactured by TOTO Ltd.) was exposed to the sun light for 13 hours, then the measurement of the water contact angle of the hydrophilic surface and the fouling test were carried out by the methods described above. The evaluation results are shown in Table 3.

[Examples 67 to 70]

To the corona-treated surface of a base material film comprising a biaxially oriented polyethylene terephthalate film (manufactured by Unitika Ltd., Emblet SA) with a thickness of 100 μm which was subjected to a corona treatment on one surface, an anchor agent (manufactured by Mitsui Takeda Chemicals Inc., a solution in which Takerack A-310 and Takenate D110N (trade name) were mixed at a ratio of 3:2 and diluted with ethyl acetate) was applied and dried, whereby a coating film of 0.2 g/m$^2$ was laminated. Then, as a composition for forming a coating film, a solution obtained by blending compounds as shown in Table 4 and diluting it with ethanol to become 70% by weight was applied thereto in such a manner that the concentration of the composition component became 3. 6 g/m$^2$ using a Mayer bar. Then, the film was dried with a hot-air dryer in which the temperature was set at 80°C for 30 seconds. Subsequently, the applied surface was coated with a cover film shown in Table 4 so as to avoid trapping air, and the film was fixed on a stainless plate so as to make the side of the cover film up. Then, the surface of the cover film was irradiated with UV using a UV irradiator (manufactured by Eyegraphics Co. Ltd., EYE GRANDAGE type ECS 301G1) under the condition that the UV intensity was 240 mW/cm$^2$ and the accumulated amount of dose was 340 mJ/cm$^2$, whereby the composition

layer was copolymerized. Then, a one-day aging treatment was carried out in an oven at 40°C, and the cover film was removed, whereby a laminated film was obtained.

The evaluation results of the obtained laminated films are shown in Table 4.

[Comparative Examples 8 to 11]

An antifouling film was prepared by the same method in Example 67 using a cover film described in Table 4 instead of the cover film used in Example 67. The evaluation results are shown in Table 4.

The numerical value of "after washing" in the column of the water contact angle of the polymer layer (crosslinked coating film) in the following table indicates the water contact angle of the polymer layer after washing the surface of the polymer layer with water at 23°C for 30 seconds, removing water droplets, and drying in an oven at 70°C for 1 minute.

Table 3

| | Blending ratio of antifouling coating material (pt: parts) | | | | Cover film | | Crosslinked coating film | | Fouling test | |
|---|---|---|---|---|---|---|---|---|---|---|
| | Compound 1 | Compound 2 | Initiator | accelerator | type | Water contact angle | Before washing | After wasing | First time opperation | Third time operation |
| Ex. 61 | 2 0 pt. | 8 0 pt. | 1 pt. | 5 pt. | A | 24 | 26 | 32 | 5 | 4 |
| Ex. 62 | 2 0 pt. | 8 0 pt. | 1 pt. | 5 pt. | B | 41 | 28 | 37 | 4 | 4 |
| Ex. 63 | 4 0 pt. | 6 0 pt. | 1 pt. | 5 pt. | A | 24 | 23 | 31 | 5 | 4 |
| Ex. 64 | 4 0 pt. | 6 0 pt. | 1 pt. | 5 pt. | B | 41 | 25 | 34 | 5 | 4 |
| Ex. 65 | 2 0 pt. | 8 0 pt. | 1 pt. | 5 pt. | E | 26 | 34 | 43 | 4 | 3 |
| Ex. 66 | 4 0 pt. | 6 0 pt. | 1 pt. | 5 pt. | F | 28 | 23 | 33 | 4 | 3 |
| Comp.Ex. 4 | 2 0 pt. | 8 0 pt. | 1 pt. | 5 pt. | C | 64 | 56 | 63 | 1 | 1 |
| Comp.Ex. 5 | 2 0 pt. | 8 0 pt. | 1 pt. | 5 pt. | D | 104 | 86 | 85 | 1 | 1 |
| Comp.Ex. 6 | 4 0 pt. | 6 0 pt. | 1 pt. | 5 pt. | C | 64 | 49 | 59 | 1 | 1 |
| Comp.Ex. 7 | 4 0 pt. | 6 0 pt. | 1 pt. | 5 pt. | D | 104 | 73 | 82 | 1 | 1 |
| Ref.Ex. 1 | — | — | — | — | — | | 4 | — | 2 | 2 |

Table 4

| | Blending ratio of antifouling coating material | | | | Cover film | | Crosslinked coating film | | Fouling test | |
|---|---|---|---|---|---|---|---|---|---|---|
| | Compound 1 | Compound 2 | Initiator | accelerator | type | Water contact angle | Before washing | After wasing | First time opperation | Third time operation |
| Ex. 67 | 2 0 pt. | 8 0 pt. | 1 pt. | 5 pt. | A | 24 | 33 | 35 | 5 | 4 |
| Ex. 68 | 2 0 pt. | 8 0 pt. | 1 pt. | 5 pt. | B | 41 | 33 | 39 | 5 | 4 |
| Ex. 69 | 4 0 pt. | 6 0 pt. | 1 pt. | 5 pt. | A | 24 | 26 | 28 | 5 | 4 |
| Ex. 70 | 4 0 pt. | 6 0 pt. | 1 pt. | 5 pt. | B | 41 | 25 | 27 | 5 | 4 |
| Comp.Ex. 8 | 2 0 pt. | 8 0 pt. | 1 pt. | 5 pt. | C | 64 | 60 | 63 | 1 | 1 |
| Comp.Ex. 9 | 2 0 pt. | 8 0 pt. | 1 pt. | 5 pt. | D | 104 | 101 | 101 | 2 | 2 |
| Comp.Ex.10 | 4 0 pt. | 6 0 pt. | 1 pt. | 5 pt. | C | 64 | 46 | 50 | 1 | 1 |
| Comp.Ex.11 | 4 0 pt. | 6 0 pt. | 1 pt. | 5 pt. | D | 104 | 98 | 105 | 2 | 2 |

[Example 71]

The anti-fogging property of the laminated film obtained in Example 63 was evaluated by the following method.

In a room at a temperature of 23°C, 300 ml of water at 35°C was put in a 500-ml beaker, then, the laminated film was placed on the beaker so as to make the side of the polymer layer down, and the upper part of the beaker was covered and sealed with the film. The degree of fogging was observed after 30 seconds and 60 seconds. As a result, the polymer layer was not fogged after 30 seconds, and after 60 seconds, fine droplets were attached to a part of the polymer layer, and the layer became slightly opaque.

Incidentally, a PET film (Teijin Tetoron Film HB3 with a thickness of 50 μm) was evaluated in the same method. As a result, fine water droplets were attached to make the film slightly opaque after 30 seconds, and after 60 seconds, fine water droplets were attached on the entire surface to make the film opaque. Therefore, it is clear that the laminated film obtained in Example 63 has an anti-fogging property.

[Example 72]

The antistatic property of the laminated film obtained in Example 63 was evaluated by the following method.

The laminated film was subjected to a humidity conditioning treatment for 12 hours under the condition that the temperature was 35°C and the relative humidity was 80%, then left in the environment that the temperature was 23°C and the relative humidity was 50% for 2 hours. Subsequently, the surface resistivity of the polymer layer of the laminated film was measured in accordance with JIS-K6911 under the same condition using a digital Ultra High Resistance Meter /picoammeter R8340A/R12704 manufactured by Advantest Co. As a result, the surface resistivity of the polymer layer of the laminated film was $10^{12}$ Ω.

Incidentally, the surface resistivity of a PET film (Teij in Tetoron FIlm HB3 with a thickness of 50 μm) was measured in a similar manner. As a result, the surface resistivity thereof was $10^{15}$ Ω. Therefore, it is clear that the laminated film obtained in Example 63 has an antistatic property.

Industrial Applicability

The antifouling material according to the present invention is useful as a material in which an antifouling property and an anti-fogging property are required, for example, a building material, an optical material and a material for an electric appliance, or a cladding material for such a material or the like, as well as a paint material. Further, the antifouling film comprising the laminated film according to the present invention is useful as a guide plate such as an advertising display, an advertisement or a guide plate, a sign board for a railway, a road or the like, an exterior wall for a building, a window glass, a cladding material for agriculture, a cladding material for a tent or the like.

**Claims**

1. An antifouling material comprising a copolymer obtained by copolymerizing a composition containing a compound represented by the general formula (1):

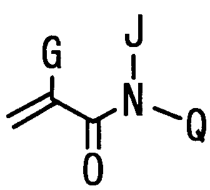

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$, with the proviso that the case where J and Q are simultaneously a combination of a hydrogen atom and a hydrogen atom, a combination of a hydrogen atom and a methyl group or a combination of a methyl group and a methyl group is excluded) and a compound having at least two (meth)acryloyl groups in the molecule.

2. The antifouling material according to claim 1, wherein the compound having at least two (meth)acryloyl groups in the molecule according to claim 1 is any compound selected from compounds represented by the following general formula (2) to general formula (5):

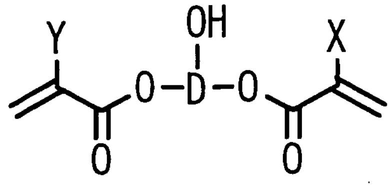

(2)

(wherein X and Y independently represent a hydrogen atom or a methyl group, D represents

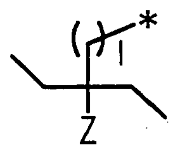

or

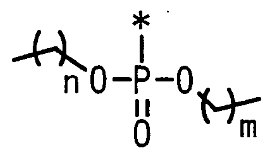

1 represents 0 or 1, n and m independently represent an integer from 1 to 6, Z represents a hydrogen atom or

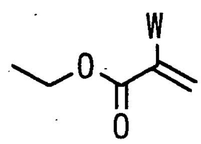

W represents a hydrogen atom or a methyl group, and the asterisk represents a bond which binds to the hydroxyl group);

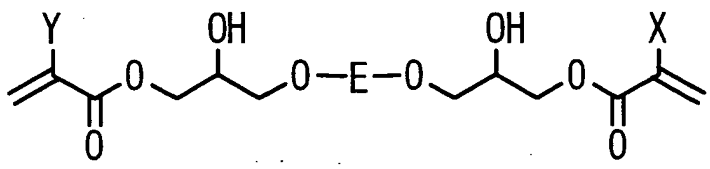

(3)

(wherein E represents

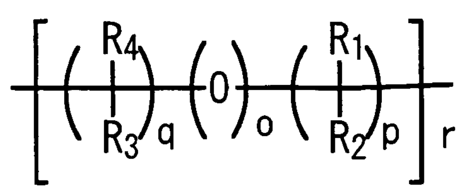

or

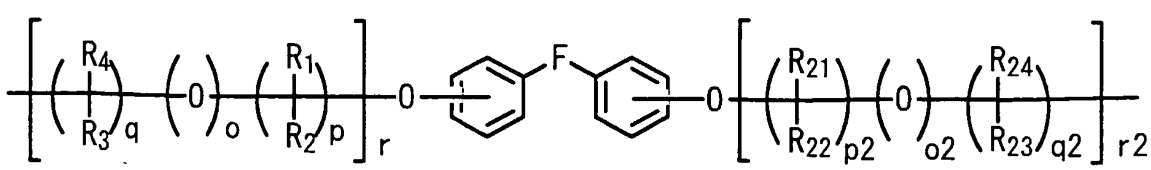

F represents one type selected from

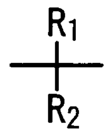 , 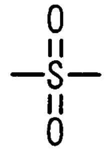 , 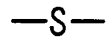

$R_1$ to $R_4$, $R_{21}$ to $R_{24}$ independently represent a hydrogen atom, a methyl group or a hydroxyl group, o and $o_2$ represent 0 or 1, and p, q, r, p2, q2 and r2 independently represent an integer from 1 to 3);

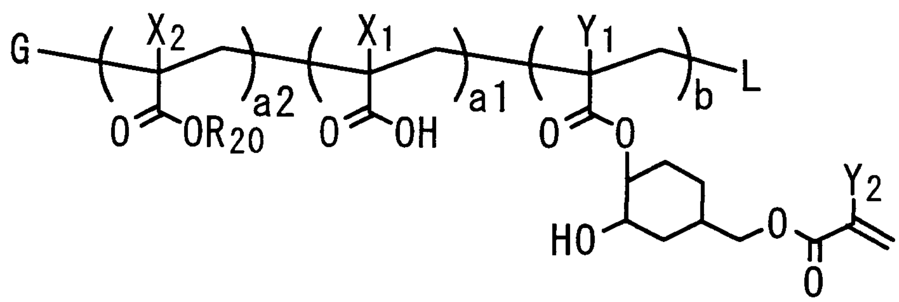

(4)

(wherein G represents

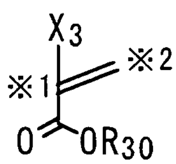 or 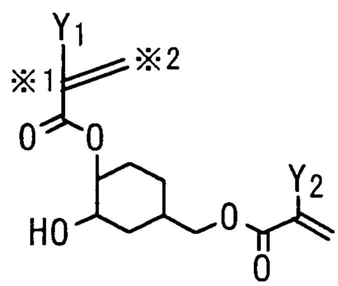 ,

L represents

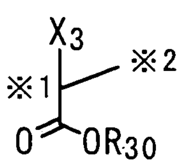 or 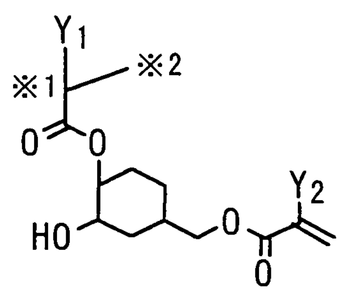 ,

$X_1$, $X_2$, $X_3$, $Y_1$ and $Y_2$ independently represent a hydrogen atom or a methyl group, $R_{20}$ and $R_{30}$ independently represent a hydrogen atom, a methyl group, an ethyl group, a hydroxyethyl group or a hydroxypropyl group, a1, a2 and b independently represent an integer from 1 to 1000, and※1 and※2 represent a binding site capable of forming a bond with a residue except for G and L in the compound represented by the general formula (4)); and

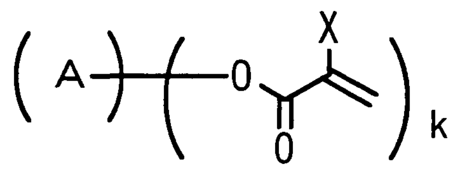

(5)

(wherein A represents

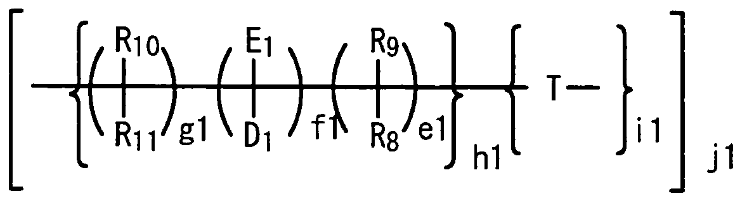

or

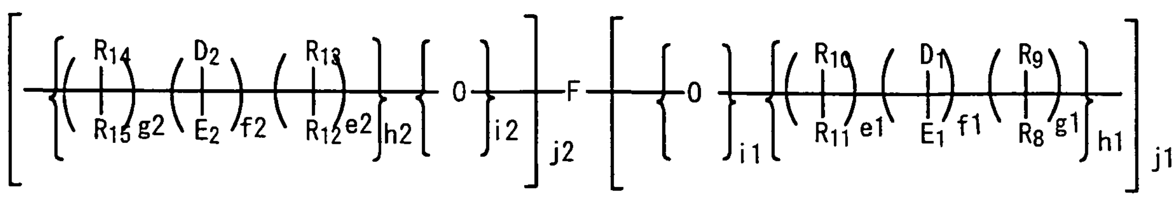

$D_1$, $D_2$, $E_1$ and $E_2$ independently represent a hydrogen atom, a methyl group, an ethyl group, a (meth)acryloyloxy group or a (meth)acryloyloxymethyl group, $R_8$ to $R_{15}$ independently represent a hydrogen atom or a methyl group, e1, e2, g1, g2, i1 and i2 independently represent an integer from 0 to 2, f1, f2, h1, h2, j1 and j2 independently represent an integer from 1 to 4, X represents a hydrogen atom or methyl, and k represents an integer from 2 to 6, T is selected from an oxygen atom and an ester bond,
F represents an oxygen atom, an ester bond or a group selected from the following general formula (6) to general formula (18):

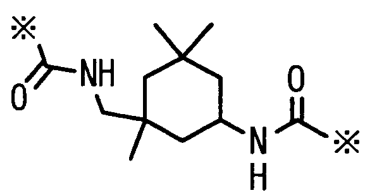

(6)

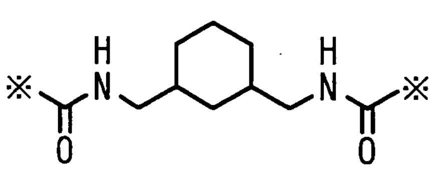

(7)

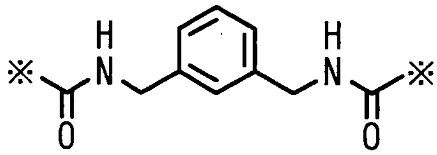

(8)

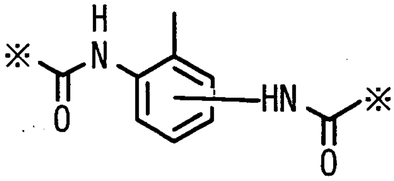

(9)

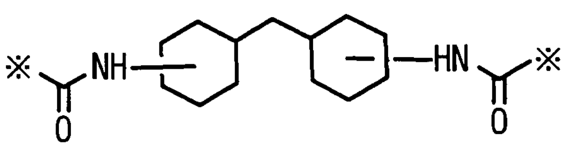

(10)

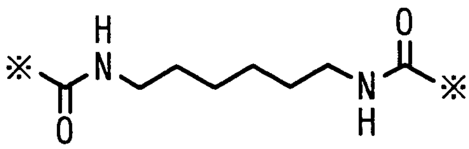

(11)

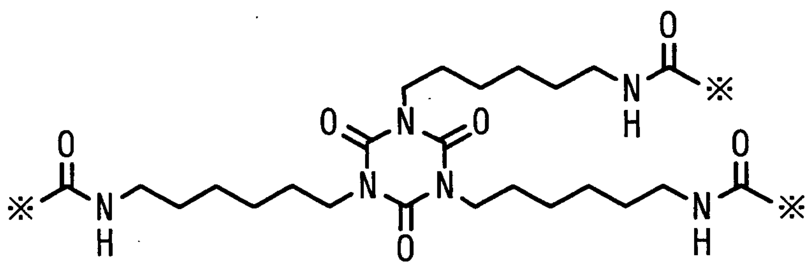

(12)

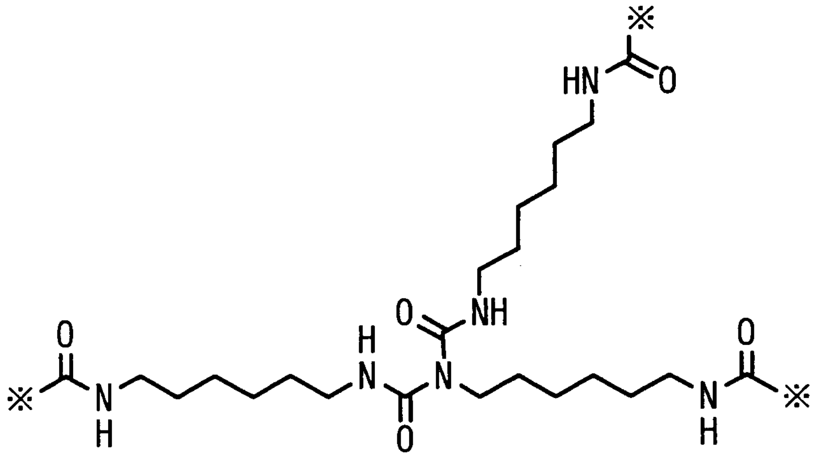

(1 3)

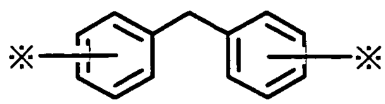

(1 4)

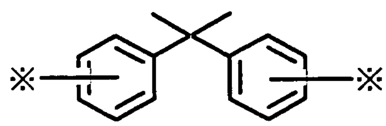

(1 5)

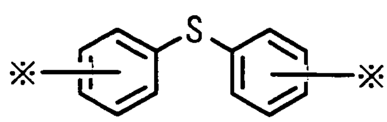

(1 6)

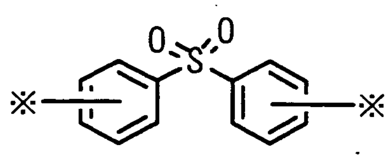

(1 7)

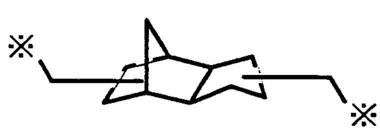

(1 8)

wherein ※ represents a bond).

3. An antifouling material comprising a copolymer obtained by copolymerizing the composition according to claim 1 which further comprises a compound represented by the following general formula (19):

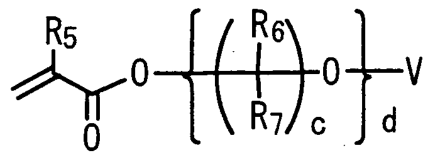

(19)

(wherein $R_5$ represents a hydrogen atom or a methyl group, $R_6$ and $R_7$ independently represent a hydrogen atom, a methyl group or an ethyl group, c represents an integer from 2 to 6, d represents an integer from 0 to 3, V represents a hydrogen atom, a methyl group or

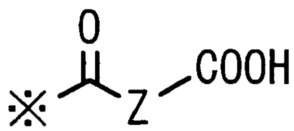 、 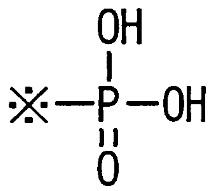 or 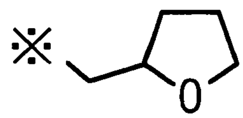

Z represents an alkylene group having 1 to 10 carbon atoms, a cycloalkylene group having 4 to 10 carbon atoms, or a phenylene group, and ※ represents a bond which binds to the oxygen atom).

**4.** The antifouling material according to claim 2, wherein the transparency value of the copolymer obtained by copolymerizing the composition according to claim 2 is from 0.1 to 5.0.

**5.** The antifouling material according to claim 3, wherein the transparency value of the copolymer obtained by copolymerizing the composition according to claim 3 is from 0.1 to 5.0.

**6.** A copolymer obtained by copolymerizing a composition according to claim 2.

**7.** A copolymer obtained by copolymerizing a composition according to claim 3.

**8.** A laminated film **characterized in that** a polymer layer having a water contact angle of 45 degrees or less comprising a copolymer of a compound represented by the general formula (1) and a compound having at least one hydroxyl group and two or more (meth) acryloyl groups in the molecule is formed on one surface of a base material film:

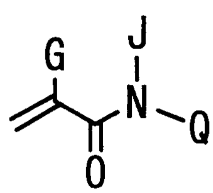

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH(OH)CH_2OH$, with the proviso that the case where J and Q are simultaneously a combination of a hydrogen atom and a hydrogen atom, a combination of a hydrogen atom and a methyl group or a combination of a methyl group and a methyl group is excluded).

**9.** The laminated film according to claim 8 **characterized by** having an adhesive layer on the surface of the base material film on which the polymer layer is not formed.

**10.** The laminated film according to claim 9 **characterized in that** a release film is laminated on the surface of the adhesive layer laminated on the base material film.

**11.** The laminated film according to any one of claims 8 to 10 **characterized in that** a releasable protective layer is

laminated on the surface of the polymer layer having a water contact angle of 45 degrees or less.

**12.** The laminated film according to claim 8 **characterized in that** the laminated film can be obtained by forming a coating layer comprising a composition containing a compound represented by the general formula (1) and a compound having at least one hydroxyl group and two or more (meth)acryloyl groups in the molecule on one surface of a base material film, covering the surface of the coating layer with a cover film having a water contact angle of the surface to be in contact with the coating layer of 55 degrees or less, and then irradiating the coating layer with radiation.

**13.** An antifouling film comprising a laminated film according to any one of claims 8 to 12.

**14.** A method for producing a laminated film **characterized by** forming a coating layer comprising a composition containing a compound represented by the general formula (1) and a compound having at least one hydroxyl group and two or more (meth) acryloyl groups in the molecule on one surface of a base material film, covering the surface of the coating layer with a cover film having a water contact angle of the surface to be in contact with the coating layer of 55 degrees or less, and then irradiating the coating layer with radiation, whereby the composition coating layer is copolymerized:

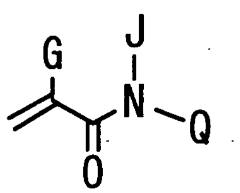

(1)

(wherein G represents a hydrogen atom or a methyl group, J and Q independently represent a hydrogen atom, a methyl group, $-CH_2OH$, $-CH_2CH_2OH$, $-CH_2CH_2CH_2OH$, or $-CH_2CH (OH) CH_2OH$, with the proviso that the case where J and Q are simultaneously a combination of a hydrogen atom and a hydrogen atom, a combination of a hydrogen atom and a methyl group or a combination of a methyl group and a methyl group is excluded).

**15.** The method for producing a laminated film according to claim 14 **characterized in that** the cover film is a film having a layer comprising a vinyl alcohol-based polymer on the surface to be in contact with the composition coating layer.

**16.** The method for producing a laminated film according to claim 14 or 15 **characterized by** having an adhesive layer on the other side of the surface of the base material film.

**17.** The method for producing a laminated film according to claim 16 **characterized by** laminating a release film on the surface of the adhesive layer.

**18.** The method for producing an antifouling film according to any one of claims 14 to 17, wherein the laminated film is an antifouling film.

**19.** A cladding material comprising an antifouling film according to claim 13.

**20.** An antifouling member **characterized in that** an antifouling film according to claim 13 is disposed on the surface thereof.

**21.** A guide plate or a sign board comprising an antifouling film according to claim 13 laminated on the surface.

**22.** An exterior wall comprising an antifouling film according to claim 13 laminated on the surface.

**23.** A window glass comprising an antifouling film according to claim 13 laminated on the surface.

*Fig. 1*

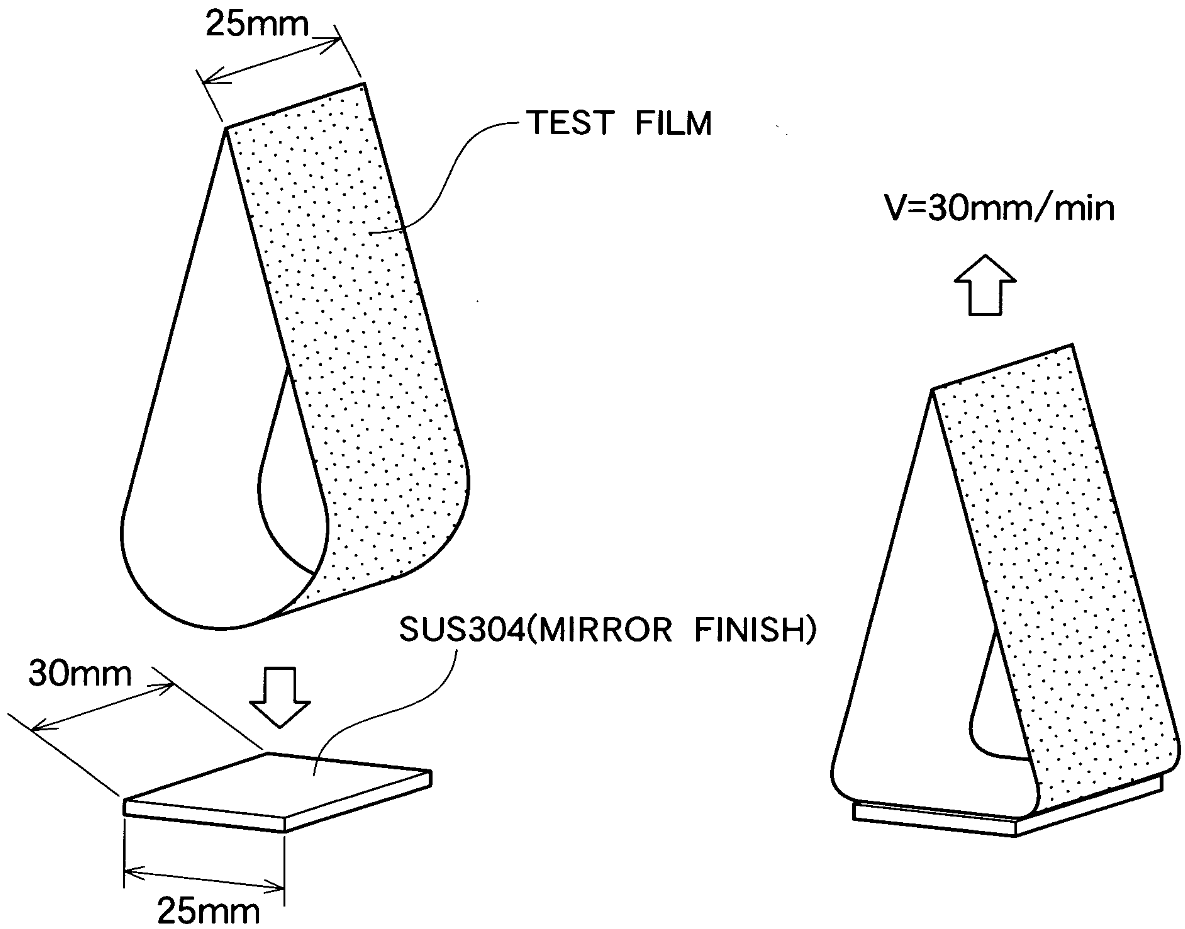


FINAT Test Method No.9
(FINAT Technical Handbook 6th edition, 2001)

Fig. 2

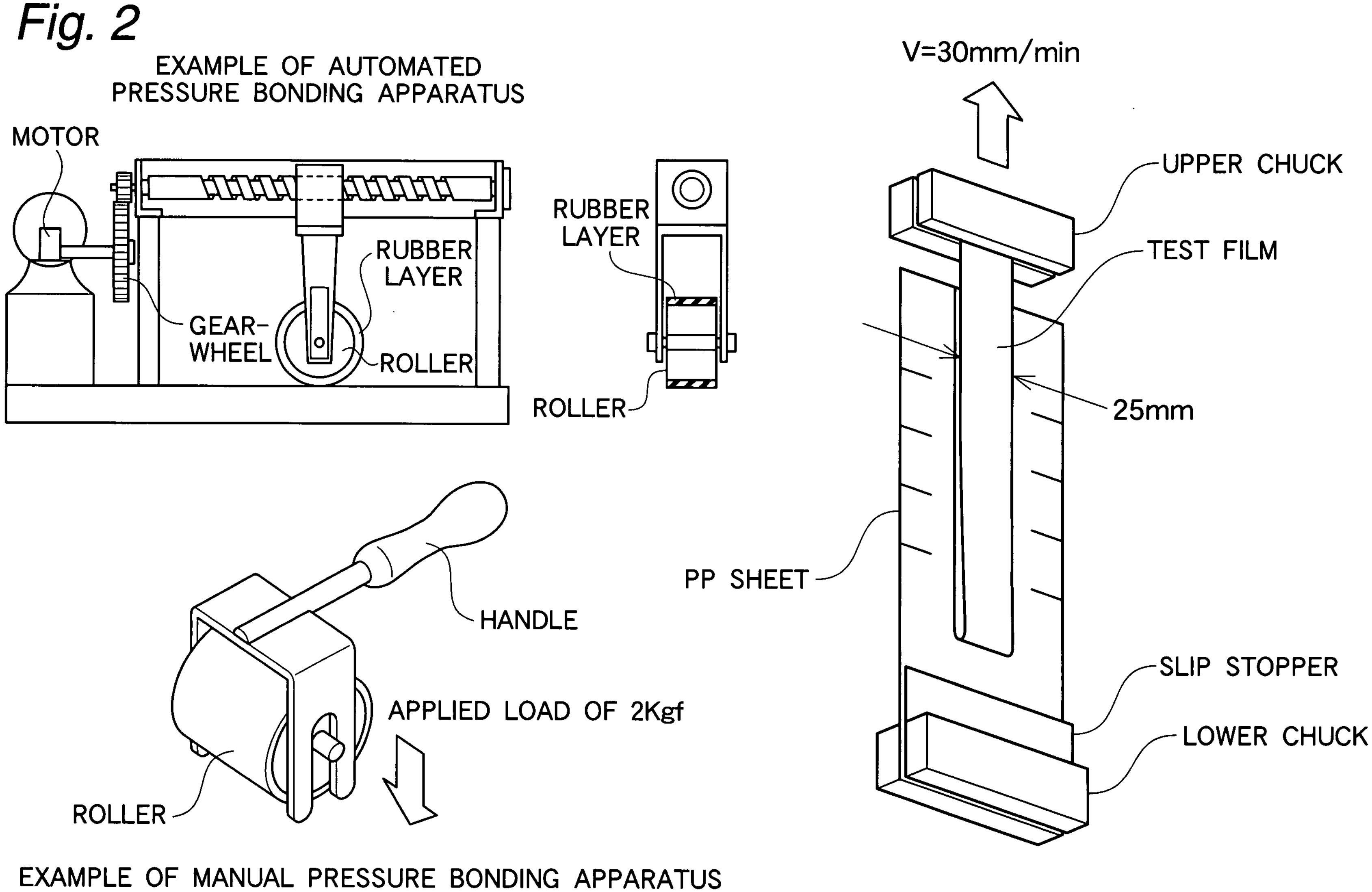
EXAMPLE OF AUTOMATED PRESSURE BONDING APPARATUS
MOTOR
RUBBER LAYER
GEAR-WHEEL
ROLLER
RUBBER LAYER
ROLLER
HANDLE
APPLIED LOAD OF 2Kgf
ROLLER
EXAMPLE OF MANUAL PRESSURE BONDING APPARATUS
V=30mm/min
UPPER CHUCK
TEST FILM
25mm
PP SHEET
SLIP STOPPER
LOWER CHUCK

**INTERNATIONAL SEARCH REPORT**

International application No.
PCT/JP03/16971

A. CLASSIFICATION OF SUBJECT MATTER
Int.Cl$^7$ C09D4/02, C09D133/26, C09D5/16, C08F220/58, C08F220/28, B32B27/30, C09K3/00

According to International Patent Classification (IPC) or to both national classification and IPC

B. FIELDS SEARCHED

Minimum documentation searched (classification system followed by classification symbols)
Int.Cl$^7$ C09D4/00-4/06, C09D5/16, C09D133/00-133/26, C08F220/00-220/70, B32B27/30, C09K3/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-183015 A (Sekisui Chemical Co., Ltd.), 07 July, 1998 (07.07.98), Claims; Par. Nos. [0005], [0011]; examples (Family: none) | 1-23 |
| Y | JP 4-353570 A (Asai Bussan Kabushiki Kaisha), 08 December, 1992 (08.12.92), Claims; Par. No. [0011]; examples (Family: none) | 1-23 |
| Y | JP 63-251401 A (Dainippon Printing Co., Ltd.), 18 October, 1988 (18.10.88), Claims; page 6, lower right column (Family: none) | 1-23 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 March, 2004 (31.03.04) | 20 April, 2004 (20.04.04) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No. PCT/JP03/16971

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-140109 A (Toagosei Co., Ltd.), 25 May, 1999 (25.05.99), Claims; Par. No. [0008]; chemical formula 1 (Family: none) | 2-23 |
| Y | JP 3-281613 A (Kuraray Co., Ltd.), 12 December, 1991 (12.12.91), Claims; page 4, lower left column to page 5, upper left column; page 5, lower left column, lines 13 to 15 (Family: none) | 2-23 |
| Y | JP 2002-201211 A (Kao Corp.), 19 July, 2002 (19.07.02), Claims; column 6, lines 20 to 21 (Family: none) | 2-23 |
| A | WO 01/29138 A1 (JSR Corp.), 26 April, 2001 (26.04.01), Claims & JP 2001-114831 A | 2 |

Form PCT/ISA/210 (continuation of second sheet) (July 1998)